(19) Europäisches Patentamt / European Patent Office / Office européen des brevets

(11) **EP 4 498 217 B1**

(12) **EUROPEAN PATENT SPECIFICATION**

(45) Date of publication and mention of the grant of the patent:
**15.07.2026 Bulletin 2026/29**

(21) Application number: **24708962.6**

(22) Date of filing: **04.03.2024**

(51) International Patent Classification (IPC):
**G06V 10/141** (2022.01)    **G06F 3/04842** (2022.01)
**G06V 10/145** (2022.01)    **G06V 10/10** (2022.01)
**G06V 40/13** (2022.01)     **G06V 10/24** (2022.01)

(52) Cooperative Patent Classification (CPC):
**G06V 40/1318; G06F 1/1684; G06F 3/041;**
**G06F 3/04845; G06F 3/0488; G06V 10/141;**
**G06V 10/145; G06V 10/17; G06V 10/24**

(86) International application number:
**PCT/KR2024/002761**

(87) International publication number:
**WO 2024/253293 (12.12.2024 Gazette 2024/50)**

(54) **ELECTRONIC DEVICE FOR ACQUIRING INFORMATION RELATED TO FINGERPRINT SENSOR BY CONTROLLING DISPLAY, AND METHOD THEREFOR**

ELEKTRONISCHE VORRICHTUNG ZUR ERFASSUNG VON INFORMATIONEN IM ZUSAMMENHANG MIT EINEM FINGERABDRUCKSENSOR DURCH STEUERUNG DER ANZEIGE UND VERFAHREN DAFÜR

DISPOSITIF ÉLECTRONIQUE POUR ACQUÉRIR DES INFORMATIONS RELATIVES À UN CAPTEUR D'EMPREINTES DIGITALES PAR COMMANDE D'ÉCRAN, ET PROCÉDÉ ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.06.2023 KR 20230072926**
**24.07.2023 KR 20230095982**

(43) Date of publication of application:
**29.01.2025 Bulletin 2025/05**

(73) Proprietor: **Samsung Electronics Co., Ltd.**
**Suwon-si, Gyeonggi-do 16677 (KR)**

(72) Inventors:
• **KIM, Jeonghoo**
**Suwon-si, Gyeonggi-do 16677 (KR)**
• **KIM, Dongchurl**
**Suwon-si, Gyeonggi-do 16677 (KR)**
• **AN, Taeyoon**
**Suwon-si, Gyeonggi-do 16677 (KR)**
• **JIN, Intae**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(56) References cited:
CN-A- 110 490 122    KR-A- 20170 141 522
KR-A- 20180 100 140    KR-A- 20200 076 035
KR-A- 20220 034 265    KR-A- 20230 033 129

**Description**

**[Technical Field]**

The present disclosure relates to an electronic device for obtaining information associated with a fingerprint sensor by controlling a display and a method thereof.

**[Background Art]**

The shape and/or size of electronic devices are diversifying. In order to enhance mobility, an electronic devices having a reduced size and/or a reduced volume are being designed. The electronic device may include a display for visualizing information. As the number of functions supported by the electronic device increases, a size of the display may increase to visualize more information to a user, and/or to support execution of the functions. For example, the electronic device may be designed so that the size and/or volume of the electronic device is reduced, while maintaining or increasing the size of the display.

The above-described information may be provided as a related art for the purpose of helping to understand the present disclosure. No claim or determination is raised as to whether any of the above-described information may be applied as a prior art related to the present disclosure.

CN 110 490 122 A discloses a method for aligning a fingerprint sensing area of a display element with a fingerprint sensing module in an electronic device by activating the display element to emit an irradiating light beam from the fingerprint sensing area to an object, the beam exhibiting a light signal intensity pattern with lower intensity in a first area closer to the center than in a second area farther from the center, wherein the fingerprint sensing module detects the reflected light from the object to obtain raw data based on the summed reflected light signal intensity, the controller subsequently adjusts the position of the light source pattern, the fingerprint sensing module acquires adjusted data from the modified reflected light, and the position of the light source pattern is adjusted based on a comparison of the raw and adjusted data.

**[Disclosure]**

**[Technical Solution]**

The present invention is defined by the appended set of claims. The description that follows is subjected to this limitation. Any disclosure lying outside the scope of said claims is only intended for illustrative as well as comparative purposes.

According to an embodiment, an electronic device according to claim 1 is provided. The electronic device comprises a display, a fingerprint sensor disposed under the display for sensing light that is penetrated through the display and is reflected by an external object on the display, memory storing instructions, and at least one processor. The instructions, when executed by the at least one processor, cause the electronic device to output light in which a specified pattern to identify misalignment of the fingerprint sensor with respect to the display is included. The instructions, when executed by the at least one processor, cause the electronic device to obtain information by sensing light that is reflected by the external object on the display and is outputted to display the specified pattern, by using the fingerprint sensor. The instructions, when executed by the at least one processor, cause the electronic device to identify misalignment of the fingerprint sensor with respect to the display based on obtained information and information with respect to the specified pattern.

In an embodiment, a method of an electronic device according to claim 5 is provided. The method comprises comprise outputting light in which a specified pattern to identify misalignment of a fingerprint sensor with respect to a display is included. The fingerprint sensor is configured to sense light that is penetrated through the display and is reflected by an external object, and is disposed under the display. The method comprises obtaining information by sensing light that is reflected by the external object on the display and is outputted to display the specified pattern, by using the fingerprint sensor. The method comprises identifying misalignment of the fingerprint sensor with respect to the display based on obtained information and information with respect to the specified pattern.

**[Description** of the Drawings]

FIG. 1 illustrates an embodiment of an electronic device including a fingerprint sensor.
FIG. 2 illustrates an example of a block diagram of an electronic device, according to an embodiment.

FIGS. 3A to 3B illustrate flowcharts of an electronic device according to an embodiment.

FIG. 4 illustrates visual objects displayed by an electronic device, according to an embodiment.

FIG. 5 illustrates an example of information obtained from a fingerprint sensor of an electronic device, according to an embodiment.

FIGS. 6A to 6C illustrate an example of an operation in which an electronic device identifies a position of a fingerprint sensor with respect to a display using information obtained from the fingerprint sensor.

FIGS. 7A to 7B illustrate an example of an operation in which an electronic device identifies a position of a fingerprint sensor with respect to a display using information obtained from the fingerprint sensor.

FIG. 8 illustrates an example of an operation of an electronic device sequentially displaying a plurality of visual objects on a display.

FIG. 9 illustrates an example of a timing diagram for describing visual objects displayed by an electronic device.

FIGS. 10A to 10B illustrate an example of an operation of an electronic device including a deformable housing.

FIG. 11 illustrates a flowchart of an electronic device according to an embodiment.

FIG. 12 is a block diagram of an electronic device in a network environment according to various embodiments.

**[Mode for Invention]**

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "first", "second", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like, for example. The module may be an integrally configured component or a minimum unit or part thereof that performs one or more functions. For example, a module may be configured with an application-specific integrated circuit (ASIC).

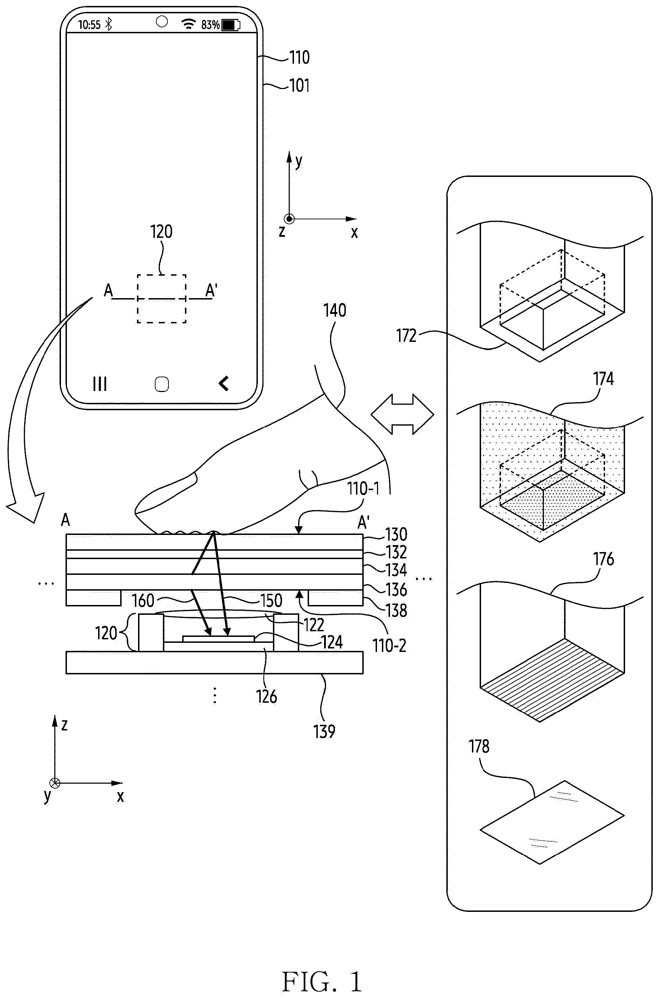

FIG. 1 illustrates an embodiment of an electronic device 101 including a fingerprint sensor 120. In an embodiment, in terms of being owned by a user, the electronic device 101 may be referred to as a terminal (or user terminal). For example, the terminal may include a personal computer (PC) such as a laptop and desktop. For example, the terminal may include a smartphone, a smart pad, and/or a tablet PC. The terminal may include a smart accessory such as a smart watch and/or a head-mounted device (HMD).

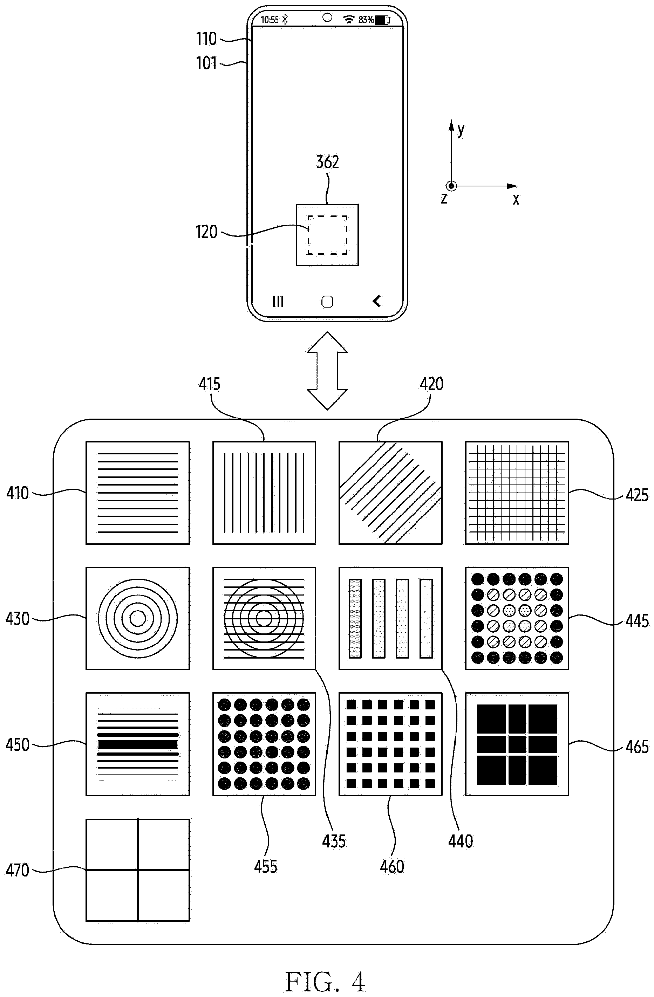

According to an embodiment, the electronic device 101 may include a display 110. By controlling the display 110, the electronic device 101 may output visual information (e.g., visual objects referred to as a pattern image in FIG. 4 and/or light representing the visual objects) to the user. For example, the display 110 may output visualized information to the user by being controlled by a controller such as a central processing unit (CPU) (or application processor (AP)) and/or graphic processing unit (GPU). The display 110 may include a liquid crystal display (LCD), a plasma display panel (PDP), and/or one or more light emitting diodes (LEDs). The LED may include an organic LED (OLED). The display 110 may include a flat panel display (FPD) and/or an electronic paper. The embodiment is not limited thereto, and the display 110 may have an at least partially curved shape or a deformable shape. The display 110 having a deformable shape may be referred to as a flexible display.

According to an embodiment, the display 110 of the electronic device 101 may include a sensor for detecting an external object (e.g., a user's finger 140) on the display 110. The sensor may include a touch sensor for identifying a position of an external object in contact with the display 110, such as a touch sensor panel (TSP). The embodiment is not limited thereto, and the electronic device 101 may use the TSP to detect an external object that is contacting with the display 110 or floating on the display 110.

According to an embodiment, the electronic device 101 may include a sensor for obtaining biometric information to support a function (e.g., a function provided by execution of a software application) associated with security. The biometric information may include features uniquely included in the user's body. The biometric information may include an iris, a face, a vein, and/or a fingerprint. Based on the biometric information obtained using the sensor, the electronic device 101 may authenticate the user. Authenticating the user may include an operation of identifying whether the user who provided the biometric information is a user pre-registered in the electronic device 101 and/or a network service linked to the electronic device 101. For example, the electronic device 101 may identify whether the user who provided the biometric information to the sensor is a user corresponding to pre-registered biometric information based on similarity and/or consistency between the pre-registered biometric information and biometric information obtained through the sensor.

In an embodiment, based on authenticating the user, the electronic device 101 may execute a function for payment (or settlement). Based on authenticating the user, the electronic device 101 may execute a function for adjusting accessibility to a software application installed in the electronic device 101, such as unlocking. According to an embodiment, the electronic device 101 may transmit a result of authenticating the user to an external electronic device (e.g., a security system for controlling access to a building) distinguished from the electronic device 101, so that the external electronic device executes a function associated with the user of the electronic device 101 and/or the electronic device 101.

According to an embodiment, the electronic device 101 may include a fingerprint sensor 120 for obtaining information on a fingerprint. The electronic device 101 may obtain information on a fingerprint of fingertip using the fingerprint sensor 120. The information on the fingerprint may include an image indicating a 3-dimensional shape of fingerprint. Pixels in the image may have brightness values based on shape and/or reflection characteristics of different points on the fingerprint. For example, according to ridge and/or valley included in the fingerprint, the shape and/or reflection characteristics of different points on the fingerprint may be distinguished. The electronic device 101 may identify shapes of ridge and/or valley included in the fingerprint, using the image obtained from the fingerprint sensor 120. Since people have different fingerprints, the electronic device 101 may authenticate a user using the identified fingerprint type.

According to an embodiment, the fingerprint sensor 120 may be distinguished to a capacitive fingerprint sensor, an ultrasonic fingerprint sensor, and/or an optical fingerprint sensor according to a means for obtaining information on a fingerprint. The capacitive fingerprint sensor may output information indicating a distribution of capacitances at different points on the fingerprint. For example, capacitance may be relatively high at a ridge of a fingerprint positioned relatively close to the fingerprint sensor 120 and relatively low at a valley of a fingerprint positioned relatively far from the fingerprint sensor 120. The ultrasonic fingerprint sensor may output information used for recognizing a ridge and a valley of a fingerprint, based on characteristics in which ultrasonic waves, which are outputted from the fingerprint sensor 120 and reflected from the fingertip toward the fingerprint sensor 120, are reflected at different points on the fingerprint. For example, since ultrasonic waves are absorbed at the ridge of the fingerprint, acoustic impedance based on reflection characteristic may have a relatively low value at the ridge. Since the ultrasonic waves pass through an air gap between the valley of the fingerprint and the fingerprint sensor 120, the acoustic impedance may be reflected from the valley toward the fingerprint sensor 120. Using the fingerprint sensor 120, the electronic device 101 may obtain an image representing a fingerprint using the ultrasonic waves reflected from the valley of the fingerprint.

In an embodiment, an optical fingerprint sensor may include one or more photo detectors (PDs). Using the one or more PDs, the optical fingerprint sensor may output information on the fingerprint, based on light reflected from the ridge and/or valley to the one or more PDs. For example, at the valley of the fingerprint, light may be reflected. At the ridge of the fingerprint, light may be absorbed. The fingerprint sensor 120 based on the optical fingerprint sensor may output information representing brightness of light reflected from the valley of the fingerprint.

Referring to FIG. 1, an exemplary structure of an electronic device 101 including the fingerprint sensor 120, which is an example of an optical fingerprint sensor, is illustrated. Although an embodiment in which the fingerprint sensor 120 is disposed on a printed circuit board (PCB) 139 is illustrated, the embodiment is not limited thereto. The fingerprint sensor 120 may include a substrate 126 and one or more PDs 124 disposed on the substrate 126. The one or more PDs 124 may include photodiodes arranged in 2-dimensions. The fingerprint sensor 120 may include a lens 122 for focusing external light on one or more PDs 124. A distance between one or more PDs 124 and the lens 122 in the fingerprint sensor 120 may be associated with a focal length of the lens 122. The definition of an image for a fingerprint obtained from the fingerprint sensor 120 may be improved as a difference between a distance between the fingerprint sensor 120 and the fingerprint and the focal length decreases. For example, in order to obtain information on a fingerprint using the fingerprint sensor 120, the fingerprint may be required to be positioned based on the focal length of the fingerprint sensor 120. Since the fingerprint sensor 120 obtains an image on light reflected from the fingerprint, a light source for providing light to the fingerprint may be required, while obtaining the image using the fingerprint sensor 120.

In an embodiment, the electronic device 101 may have a structure for using the display 110 as a light source for the fingerprint sensor 120. Referring to FIG. 1, the display 110 of the electronic device 101 may include a first surface 110-1 exposed to the outside. The first surface 110-1 and/or a surface of a housing of the electronic device 101 including the first surface 110-1 may be referred to as a front surface of the electronic device 101. Referring to FIG. 1, an example of an exterior of the electronic device 101 viewed from a perspective of z-axis is illustrated. The first surface 110-1 of the display 110 is illustrated along a x-y plane of FIG. 1. In an embodiment, the fingerprint sensor 120 of the electronic device 101 may be disposed under a second surface 110-2 of the display 110 opposite to the first surface 110-1 of the display 110.

Referring to FIG. 1, from a perspective of the z-axis of FIG. 1 (or a perspective facing the front surface), the fingerprint sensor 120 of the electronic device 101 may overlap the display 110. Referring to FIG. 1, a cross-section of the electronic device 101 with respect to a line A-A' is illustrated. Along the z-axis, the fingerprint sensor 120 may be disposed under the display 110. The display 110 may include a glass 130 including the first surface 110-1 exposed to the outside. The display 110 may include an adhesive component 132 (or an adhesive layer) for fixing the glass 130. The display 110 may include a polarizer 134 configured to adjust a reflection characteristic of the display 110 with respect to external light. The display 110 may include a panel 136 including one or more pixels for visualizing information. The display 110 may include a tape sheet 138 for protecting the panel 136. Referring to FIG. 1, the glass 130, the adhesive component 132, the polarizer 134, the panel 136, and the tape sheet 138 may be sequentially coupled from the first surface 110-1 of the display 110, along the -z axis direction.

Referring to FIG. 1, in the electronic device 101, the fingerprint sensor 120 may be disposed under the panel 136 of the display 110. The fingerprint sensor 120 may be disposed under a perforated portion formed on the tape sheet 138 of the display 110. Referring to FIG. 1, in an embodiment of the electronic device 101 including the fingerprint sensor 120 disposed under the display 110 with respect to the front surface, exemplary optical paths 150 and 160 of light emitted from the panel 136 of the display 110 are illustrated. Referring to the optical path 160, light emitted from the panel 136 may be propagated directly from the panel 136 toward the fingerprint sensor 120. When the user's finger 140 is in contact with a portion of the first surface 110-1 of the display 110 superimposed on the fingerprint sensor 120, light emitted from the panel 136 may be reflected from the finger 140 and propagated toward the fingerprint sensor 120 along the optical path 150. In an embodiment, information outputted from the fingerprint sensor 120 may include an image of light reaching the fingerprint sensor 120 along the optical paths 150 and 160.

Referring to FIG. 1, in an embodiment in which the fingerprint sensor 120 is disposed under the display 110, information (e.g., an image for a fingerprint) obtained using the fingerprint sensor 120 may be distorted by a positional relationship between the fingerprint sensor 120 and the display 110. In order to detect and/or compensate for the distortion, a process for identifying the positional relationship between the fingerprint sensor 120 and the display 110 may be performed. The process may be referred to as a calibration operation. The calibration operation may include an operation of obtaining information on noise (e.g., shade of the display 110 and/or a pattern of the panel 136 of the display 110) caused by the display 110 disposed on the fingerprint sensor 120 and included in the image of the fingerprint sensor 120. The calibration operation is information associated with driving of the fingerprint sensor 120, and may include an operation of obtaining information on an exposure time, a focal length, and/or light reception sensitivity. The calibration operation may include an operation of changing the positional relationship between the fingerprint sensor 120 and the display 110. For example, an external object (e.g., a foreign object disposed between the fingerprint sensor 120 and the display 110) that affects the positional relationship between the fingerprint sensor 120 and the display 110 may be identified based on the calibration operation. The calibration operation may include an operation of comparing performance of the fingerprint sensor 120 with reference performance by parameterizing characteristics of the fingerprint sensor 120 for obtaining an image.

In an embodiment, while the calibration operation on the electronic device 101 is performed, at least one of a plurality of external objects 172, 174, and 176 may be used. The first external object 172 may be an object (e.g., a cuboid object including rubber) of a color (e.g., apricot and/or white) similar to a skin color of the finger 140. The first external object 172 may be referred to as a reflector in terms of identifying a characteristic of the fingerprint sensor 120 with respect to light reflected toward the fingerprint sensor 120. Using the reflector, the characteristic (e.g., reception sensitivity, maximum amount of received light) of the fingerprint sensor 120 with respect to light reflected toward the fingerprint sensor 120 along the optical path 150 may be identified. The first external object 172 may include at least a partially concave portion. The second external object 174 may be an object (e.g., a cuboid object including rubber) of a color (e.g., black) for absorbing light. The second external object 174 may be referred to as an absorber in terms of identifying the characteristic (e.g., minimum amount of received light) of the fingerprint sensor 120 with respect to light absorbed at the ridge of the fingerprint. The second external object 174 may include at least a partially concave portion. The third external object 176 may be an object having a shape (e.g., a shape in which a plurality of ridges and/or valleys are formed) and/or color similar to a fingerprint. The third external object 176 may be referred to as a charter. Using the third external object 176, a parameter (e.g., magnification) for quality of an image obtained using the fingerprint sensor 120 and including a fingerprint may be adjusted.

In an embodiment, a third external object 176 comprising ridges and/or valleys with an interval similar to the ridge and/or valley of the fingerprint may be vulnerable to dust and/or wear. According to an embodiment, the electronic device 101 may perform an operation for obtaining the characteristic of the fingerprint sensor 120 without the third external object 176, in order to complete a calibration operation independent of dust filling the valley of the third external object 176 and/or abrasion of the third external object 176. For example, in order to obtain the characteristics of the fingerprint sensor 120, the electronic device 101 may display one or more visual objects to be described with reference to FIG. 4, on the display 110. In an embodiment, a function for self-repair by owner of the electronic device 101 may be supported by the electronic device 101. In a state that the owner has repaired the electronic device 101 (e.g., repair of the display 110 and/or the fingerprint sensor 120), the electronic device 101 may perform an operation for obtaining the characteristic of the fingerprint sensor 120 using an object (e.g., a fourth external object 178 such as paper) easily accessible by the owner, independent of the external objects 172, 174, and 176.

As described above, according to an embodiment, the electronic device 101 may include the fingerprint sensor 120 disposed under the display 110. While the electronic device 101 is being produced or repaired, it may be required to verify clarity (or accuracy) of an image (e.g., an image for a fingerprint) obtained by the fingerprint sensor 120. According to an embodiment, the electronic device 101 may obtain information for verifying the clarity of the image without a relatively expensive object such as the external objects 172, 174, and 176, by using a screen in the display 110.

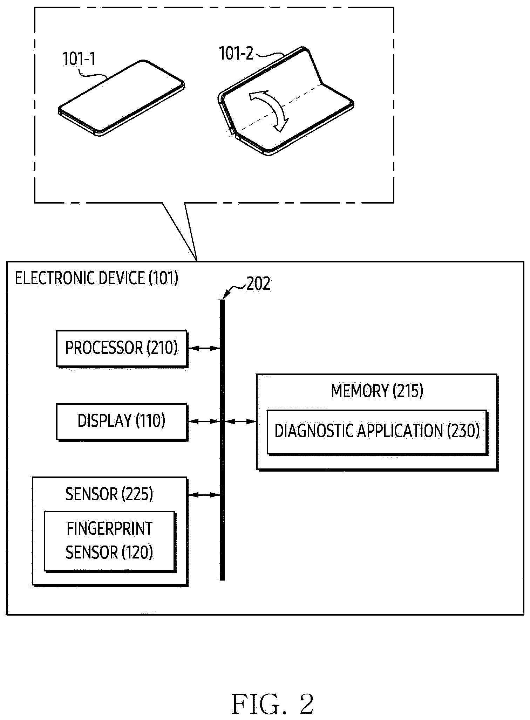

Hereinafter, an exemplary structure of the electronic device 101 for obtaining the characteristic of the fingerprint sensor 120 will be described with reference to FIG. 2.

FIG. 2 illustrates an example of a block diagram of an electronic device 101, according to an embodiment. Referring to FIG. 2, the electronic device 101 may include an electronic device 101-1 corresponding to a cuboid mobile phone, and an electronic device 101-2 including a deformable flexible display and housings engaged for deformation of the flexible display. A form factor (e.g., size, shape, and/or exterior) of the electronic device 101 is not limited to the electronic devices 101-1 and 101-2 exemplarily illustrated in FIG. 2.

Referring to FIG. 2, according to an embodiment, the electronic device 101 may include at least one of a processor 210, a display 110, a memory 215, or a sensor 225. The processor 210, the display 110, the memory 215, and the sensor 225 may be electronically and/or operably coupled with each other by an electronical component such as a communication bus 202. In the following, operational coupling of hardware may mean that a direct or indirect connection between hardware is established by wire or wirelessly so that a second hardware is controlled by a first hardware among the hardware. Although illustrated based on different blocks, the embodiment is not limited thereto, and a portion of the hardware in FIG. 2 may be included in a single integrated circuit (SOC) such as a system on chip (SoC). The type and/or number of hardware included in the electronic device 101 is not limited as illustrated in FIG. 2. For example, the electronic device 101 may include only some of the hardware components illustrated in FIG. 2.

According to an embodiment, the processor 210 of the electronic device 101 may include hardware and/or circuit for processing data based on one or more instructions. For example, hardware for processing data may include an arithmetic and logic unit (ALU), a floating point unit (FPU), a field programmable gate array (FPGA), a central processing unit (CPU), and/or an application processor (AP). The number of processors 210 may be one or more. For example, the processor 210 may have a structure of a multi-core processor such as a dual core, a quad core, or a hexa core.

According to an embodiment, the memory 215 of the electronic device 101 may include a hardware component for storing data and/or instructions inputted and/or outputted to the processor 210. For example, the memory 215 may include a volatile memory such as a random-access memory (RAM) and/or a non-volatile memory such as a read-only memory (ROM). For example, the volatile memory may include at least one of a dynamic RAM (DRAM), a static RAM (SRAM), a Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, a solid state drive (SSD), and an embedded multi-media card (eMMC).

According to an embodiment, the sensor 225 of the electronic device 101 may generate electronic information processable by the processor 210 and/or the memory 215 from non-electronic information associated with the electronic device 101. For example, the sensor 225 may include a global positioning system (GPS) sensor for detecting a geographic location of the electronic device 101. For example, the sensor 225 may generate information indicating a geographic position of the electronic device 101, based on a global navigation satellite system (GNSS) such as Galileo, Beidou, and Compass, in addition to the GPS method. The information may be stored in the memory 215, processed by the processor 210, or transmitted to another electronic device distinct from the electronic device 101 through a communication circuit. The sensor 225 is not limited to the above description, and may include an image sensor, an illuminance sensor, and/or a ToF sensor for detecting an electromagnetic wave including light. For example, the sensor 225 may include the fingerprint sensor 120 exemplarily described with reference to FIG. 1.

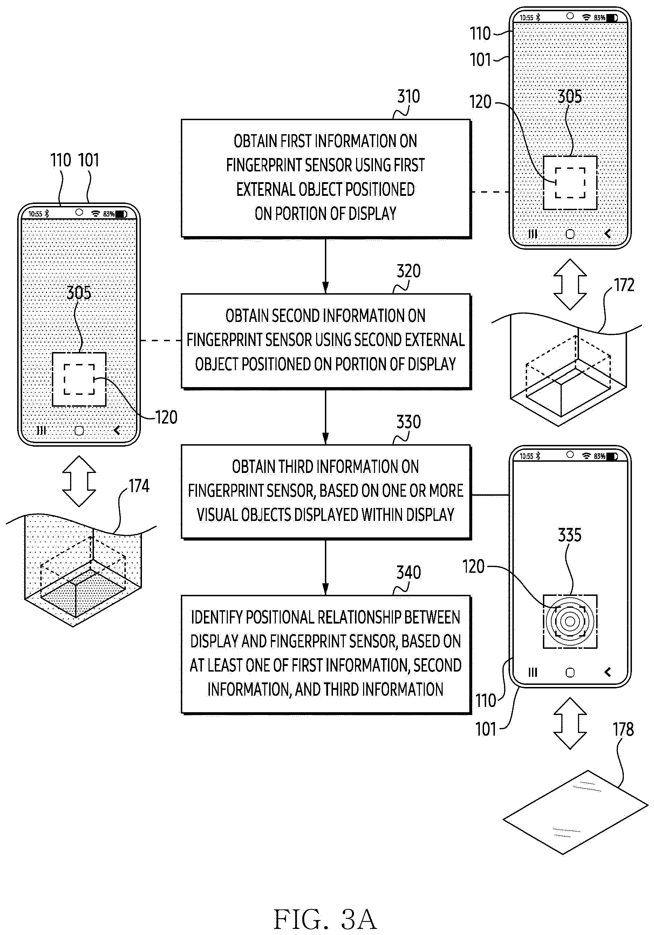

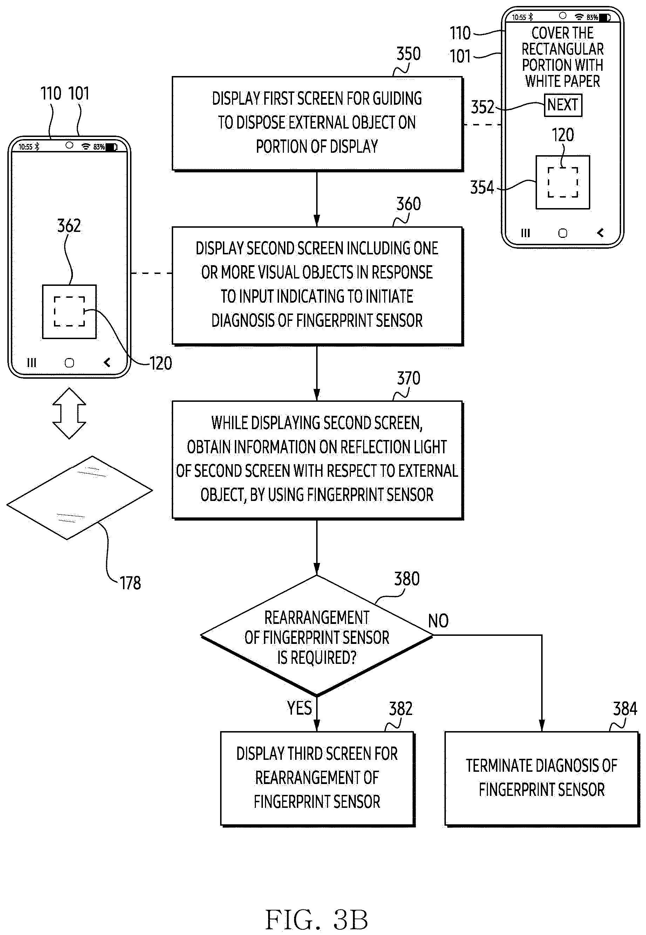

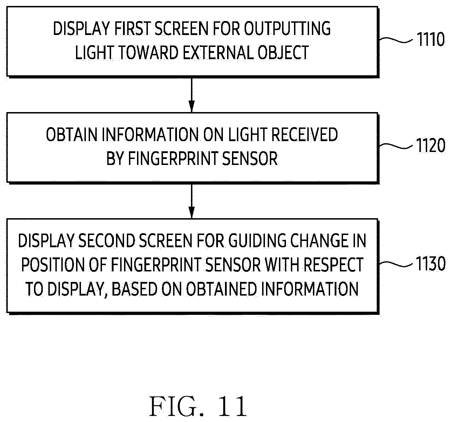

According to an embodiment, one or more instructions (or commands) indicating calculation and/or operation to be performed by the processor 210 on data may be stored in the memory 215 of the electronic device 101. A set of one or more instructions may be referred to as firmware, operating system, process, routine, sub-routine and/or application (or software application). For example, when a set of a plurality of instructions distributed in a form of the operating system, firmware, driver, and/or application is executed, the electronic device 101 and/or the processor 210 may perform at least one of operations of FIGS. 3A, 3B, and/or 11. Hereinafter, an application being installed in the electronic device 101 may mean that one or more instructions provided in a form of the application are stored in the memory 215 of the electronic device 101, and that the one or more applications are stored in a format (e.g., a file with a preset extension by the operating system of the electronic device 101) executable by the processor 210 of the electronic device 101.

Referring to FIG. 2, according to an embodiment, the processor 210 of the electronic device 101 may identify a positional relationship (or arrangement) between the display 110 and the fingerprint sensor 120 by executing a diagnostic application 230 of the memory 215. Based on the identified positional relationship, the electronic device 101 may determine whether the fingerprint sensor 120 is positioned to accurately recognize the fingerprint. The processor 210 identifying misalignment of the fingerprint sensor 120 with respect to the display 110 may output a message for guiding a re-arrangement and/or re-assembly of the fingerprint sensor 120. Based on the message, the processor 210 may cause a user (or a vendor of the electronic device 101) of the electronic device 101 to move or calibrate the fingerprint sensor 120.

As described above with reference to FIG. 1, it may be required to dispose an external object (e.g., the external objects 172, 174, and 176 of FIG. 1) designed for a calibration operation of the fingerprint sensor 120 on the display 110, in order to identify a positional relationship between the display 110 and the fingerprint sensor 120. According to an embodiment, based on the execution of the diagnostic application 230, the processor 210 may identify the positional relationship between the display 110 and the fingerprint sensor 120, by reducing dependence on the external object dedicated to the calibration operation, or without the external object. In order to identify the positional relationship independently of the external object, the processor 210 may display a screen for identifying the positional relationship in the display 110. The screen may include one or more visual objects having a pattern and/or shape. An operation in which the processor 210 identifies the positional relationship while the screen is displayed will be described with reference to FIGS. 3A to 3B. The one or more visual objects included in the screen will be described with reference to FIG. 4.

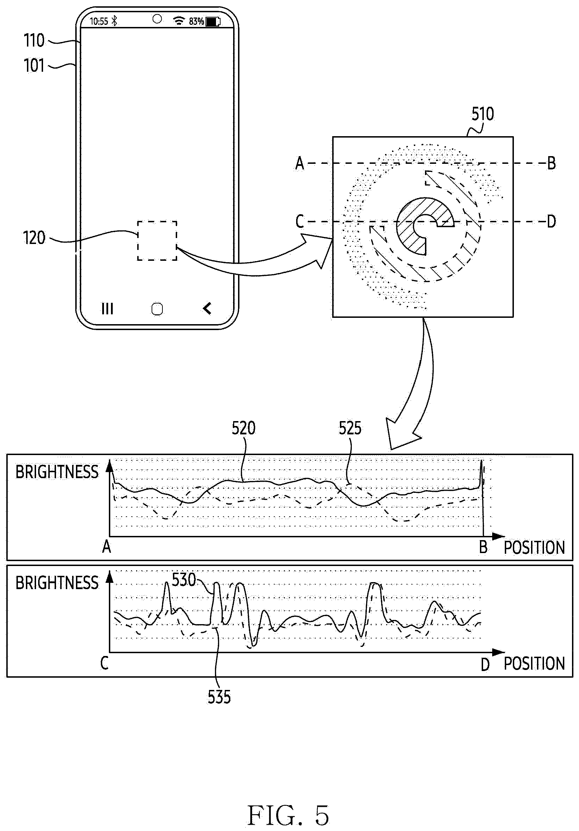

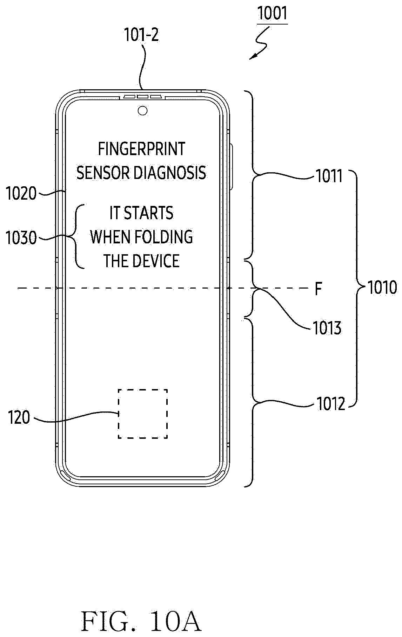

According to an embodiment, the electronic device 101 may guide to position another external object (e.g., the fourth external object 178 corresponding to the paper in FIG. 1) different from the external object dedicated to the calibration operation on the display 110, based on the execution of the diagnostic application 230. The light representing a screen provided by the diagnostic application 230 may be outputted from the display 110 and reflected from the other external object. The light reflected from the other external object may reach the fingerprint sensor 120 along the optical path 150 of FIG. 1. The processor 210 may identify the positional relationship between the display 110 and the fingerprint sensor 120 based on the light reaching the fingerprint sensor 120. The light reaching the fingerprint sensor 120 and an operation of the processor 210 identifying the positional relationship based on the light will be described with reference to FIGS. 5 to 9. The electronic device 101-2 including a deformable flexible display may output light from another portion of the display 110 toward the fingerprint sensor 120 by disposing the other portion of the display 110 on a portion of the display 110 superimposed on the fingerprint sensor 120. An operation in which the electronic device 101-2 outputs the light for identifying the positional relationship between the display 110 and the fingerprint sensor 120 based on the deformation of the display 110 will be described with reference to FIGS. 10A to 10B.

Hereinafter, an operation of the processor 210 performed based on the diagnosis application 230 of FIG. 2 will be described with reference to FIGS. 3A to 3B.

FIGS. 3A to 3B illustrate flowcharts of an electronic device 101 according to an embodiment. Operations of FIGS. 3A and/or 3B may be performed by the electronic device 101 of FIGS. 1 to 2 and/or the processor 210 of FIG. 2.

In the following embodiment, each operation may be performed sequentially, but is not necessarily performed sequentially. For example, the sequence of each operation may be changed, and at least two operations may be performed in parallel.

Referring to FIG. 3A, an operation of the electronic device 101 and/or a processor (e.g., the processor 210 of FIG. 2) of the electronic device 101 based on the execution of the diagnosis application 230 of FIG. 2 is illustrated. An operation of FIG. 3A may be performed for a calibration operation of the fingerprint sensor 120 during an assembly operation of the electronic device 101.

Referring to FIG. 3A, in operation 310, according to an embodiment, the processor of the electronic device 101 may obtain first information on a fingerprint sensor (e.g., the fingerprint sensor 120 of FIGS. 1 and 2) using a first external object 172 positioned on a portion of the display 110. Before performing operation 310, the processor may display a screen for guiding movement of the first external object 172 in the display 110. For example, the processor may display a screen including text, images, and/or video for guiding to dispose the first external object 172 on a portion of the display 110 superimposed on the fingerprint sensor 120. The screen may include the text (e.g., 'put white rubber on the display') for specifying a shape and/or color of the first external object 172. In response to an input indicating that the first external object 172 is disposed on the portion, the processor may perform operation 310.

Referring to FIG. 3A, in operation 310, the processor may display a visual object for outputting light toward the first external object 172 on a portion 305 of the display 110, superimposed on the fingerprint sensor 120. The visual object may include a figure (e.g., square and/or circular) having a preset color (e.g., white) and a size larger than the fingerprint sensor 120. The embodiments are not limited thereto. For example, the visual object may have a size equal to the fingerprint sensor 120 or smaller than the fingerprint sensor 120. While displaying the visual object, the processor may obtain an image from the fingerprint sensor 120. The image may include first information on light reflected from the first external object 172. Based on the first information, the processor may tune a value of pixels (e.g., pixels disposed in the portion 305 of the display 110). Based on the first information, the processor may adjust an exposure time for light reflected from the first external object 172 using the fingerprint sensor 120.

Referring to FIG. 3A, in operation 320, according to an embodiment, the processor of the electronic device 101 may obtain second information on the fingerprint sensor by using the second external object 174 positioned on the portion 305 of the display 110. The processor may display a screen for guiding movement of the second external object 174 in the display 110. The screen may include the text (e.g., 'put black rubber on the display') for specifying a shape and/or color of the second external object 174. When the second external object 174 is moved on the portion 305 of the display 110 based on the screen, the processor may perform operation 320. For example, in response to an input indicating the movement of the second external object 174, the processor may perform operation 320.

Referring to FIG. 3A, in operation 320, the processor may display a visual object for outputting light toward the second external object 174 on the portion 305 of the display 110 superimposed on the fingerprint sensor 120. The visual object may include a figure (e.g., square and/or circular) having a preset color (e.g., white) and a size larger than the fingerprint sensor 120. The embodiment is not limited thereto. For example, the size of the figure may be less than or equal to the size of the fingerprint sensor 120. While displaying the visual object, the processor may obtain an image from the fingerprint sensor 120. The image may include second information on light reflected from the second external object 174. Based on the second information, the processor may identify noise included in the image obtained from the fingerprint sensor 120. Based on the second information, the processor may obtain an image (e.g., a background image) obtained from the fingerprint sensor 120 in a state in which receiving of light is blocked by the second external object 274 absorbing light. The processor may obtain light leakage based on the second information. The light leakage may be obtained based on a comparison of the first information and the second information.

Referring to FIG. 3A, in operation 330, according to an embodiment, the processor of the electronic device 101 may obtain third information on the fingerprint sensor, based on one or more visual objects displayed on the display 110. The processor may display a screen for guiding movement of the fourth external object 178 in the display 110. The screen may include the text (e.g., 'put white paper on the display') for specifying a shape and/or color of the fourth external object 178. When the fourth external object 178 is moved on the display 110 based on the screen, the processor may perform operation 340. For example, in response to the input indicating the movement of the fourth external object 178, the processor may perform operation 330.

Referring to FIG. 3A, in operation 330, the processor may display a visual object 335 for outputting light toward the fourth external object 178 on the display 110. For example, the processor may output light including a specific pattern for the misalignment of the fingerprint sensor 120 by controlling the display 110. The visual object 335 may include a pattern based on a line and/or a figure. Although the visual object 335 including concentric circles is exemplarily illustrated, the embodiment is not limited thereto. An example of a pattern of the visual object 335 will be described with reference to FIG. 4. While displaying the visual object 335, the processor may obtain an image from the fingerprint sensor 120. The image may include third information on light reflected from the fourth external object 178. Based on the third information, the processor may identify a scale for the image obtained from the fingerprint sensor 120, a signal characteristic of the image (e.g., signal-to-noise ratio (SNR)), a tilt angle of the image, a positional relationship between the fingerprint sensor 120 and the display 110, and/or a foreign substance affecting the positional relationship.

Referring to FIG. 3A, in operation 340, according to an embodiment, the processor of the electronic device 101 may identify the positional relationship between the display 110 and the fingerprint sensor 120, based on at least one of the first information, the second information, and the third information. For example, the processor may identify the positional relationship between the display 110 and the fingerprint sensor 120 by comparing a reference value (or a reference range) indicating a normal positional relationship between the fingerprint sensor 120 and the display 110 and the third information of the operation 330. For example, when the third information has a value not included in the reference value and/or the reference range, the processor may display a screen for guiding rearrangement (or reassembly) of the display 110 and the fingerprint sensor 120.

As described above, the processor may perform an operation for checking the positional relationship between the display 110 and the fingerprint sensor 120 during the assembly operation. The processor may display a pattern such as visual object 335, in order to replace an external object including a bump prone to wear, such as the third external object 176 of FIG. 1, with the fourth external object 178 such as paper. An operation of checking the positional relationship based on the visual object 335 may be performed not only in the assembly operation but also in a self-repair operation by a user of the electronic device 101.

Referring to FIG. 3B, an operation of the electronic device 101 and/or a processor (e.g., the processor 210 of FIG. 2) of the electronic device 101 based on the execution of the diagnosis application 230 of FIG. 2 is illustrated.

In the following embodiment, each operation may be performed sequentially, but is not necessarily performed sequentially. For example, the sequence of each operation may be changed, and at least two operations may be performed in parallel.

An operation of FIG. 3B may be performed for a calibration operation of the fingerprint sensor 120 during the self-repair operation of the electronic device 101. For example, the processor may perform the operation of FIG. 3B based on execution of a diagnostic application. The embodiment is not limited thereto, and the processor may perform the operation of FIG. 3B based on fingerprint recognition performance based on the fingerprint sensor 120. The processor may perform the operation of FIG. 3B based on a preset period and/or cycle.

Referring to FIG. 3B, in operation 350, according to an embodiment, a processor of the electronic device 101 may display a first screen for guiding to dispose an external object (e.g., the fourth external object 178 in FIG. 1) on a portion of the display 110. Referring to FIG. 3B, an example of the first screen displayed on the display 110 based on operation 350 is illustrated. The processor may display a visual object (e.g., a rectangular figure) for guiding movement of the external object on the portion 354 of the display 110 superimposed on the fingerprint sensor 120. The processor may display text (e.g., 'cover the rectangular portion with white paper') to guide arrangement of an external object on the display 110, on the display 110. The processor may display a visual object 352 for changing and/or replacing the first screen of operation 350, on the display 110. The processor may display a visual object 352 including a preset text such as 'Next'.

Referring to FIG. 3B, in operation 360, according to an embodiment, the processor of the electronic device 101 may display a second screen including one or more visual objects in response to an input indicating to initiate the diagnosis of the fingerprint sensor. The input of operation 360 may include an input indicating selection (e.g., click and/or touch) of the visual object 352 of the first screen of operation 350. Referring to FIG. 3B, an example of the second screen displayed in the display 110 based on operation 360 is illustrated. The second screen of operation 360 may be displayed while the fourth external object 178 is positioned on the display 110. The processor may display an image including a pattern designed for the diagnosis of the fingerprint sensor 120, such as the visual object 335 of FIG. 3A, on a portion 362 of the display 110 superimposed on the fingerprint sensor 120. The processor may sequentially display a plurality of images on the portion 362 based on operation 360. The processor may output light for detecting the misalignment of the fingerprint sensor 120 based on operation 360. The light may be outputted through the display 110. The light may include a specific pattern designed to detect the misalignment.

Referring to FIG. 3B, in operation 370, according to an embodiment, while displaying the second screen of operation 360, the processor of the electronic device 101 may obtain information on reflection light of the second screen for an external object (e.g., the fourth external object 178), by using the fingerprint sensor 120. While outputting first light for detecting misalignment through the display 110, the processor may obtain information on second light received from the fingerprint sensor 120. For example, the processor may obtain information (e.g., an image) on light of the second screen reflected from an external object, by using the fingerprint sensor 120.

Referring to FIG. 3B, in operation 380, according to an embodiment, the processor of the electronic device 101 may identify whether rearrangement of the fingerprint sensor 120 is required. The processor may identify whether rearrangement of the fingerprint sensor 120 is required based on the information in operation 370. For example, when an image included in the information of operation 370 and obtained using the fingerprint sensor 120 is different from a reference image, the processor may determine that the rearrangement of the fingerprint sensor 120 is required. In order to compensate for a difference between the image included in the information of operation 370 and the reference image, the processor may perform a post-processing operation performed by the display 110, the fingerprint sensor 120, and/or the processor. The post-processing operation may include an operation of adjusting magnification of the obtained image using the fingerprint sensor 120. The post-processing operation may include an operation of rotating or expanding the image obtained using the fingerprint sensor 120. The post-processing operation may include an operation of cropping the image obtained using the fingerprint sensor 120. The post-processing operation may include an operation of adjusting the amount of light emitted to the fingerprint through the display 110 while activating the fingerprint sensor 120. The post-processing operation may include a masking operation for a specific pixel of the display 110. In operation 380, when it is determined that the rearrangement of the fingerprint sensor 120 is required (380-YES), the processor may perform operation 382. When the rearrangement of the fingerprint sensor 120 is not required (380-NO), the processor may perform operation 384.

Referring to FIG. 3B, in operation 382, according to an embodiment, the processor of the electronic device 101 may display a third screen for rearrangement of the fingerprint sensor 120. The third screen may include text, images, and/or video for guiding reassembly of the display 110 and/or the fingerprint sensor 120. The third screen may include one or more visual objects for booking a repair service provided by a vendor of the electronic device 101. The third screen may include a contact information (e.g., a phone number and/or an email) for the repair service. Based on the third screen, the processor may guide the rearrangement of the display 110 and the fingerprint sensor 120.

Referring to FIG. 3B, in operation 384, according to an embodiment, the processor of the electronic device 101 may terminate diagnosis of the fingerprint sensor 120. When the rearrangement of the fingerprint sensor 120 is not required, or when the fingerprint sensor 120 is normally positioned with respect to the display 110, the processor may terminate the diagnosis of the fingerprint sensor 120 based on operation 384. Terminating the diagnosis of the fingerprint sensor 120 may include an operation of terminating an application (e.g., the diagnosis application 230 of FIG. 2) executed by the processor.

As described above, according to an embodiment, the electronic device 101 may display a screen (e.g., the second screen of the operation 360 of FIG. 3B) for outputting light toward an external object (e.g., the fourth external object 178) positioned on the display 110. While displaying the screen, the electronic device 101 may obtain information on light reflected by the external object by using the fingerprint sensor 120. Based on the information, the electronic device 101 may display another screen (e.g., the third screen of operation 382 of FIG. 3B) for guiding a change in the position of the fingerprint sensor 120 with respect to the display 110. The electronic device 101 may prevent deterioration in recognition performance of the fingerprint sensor 120 due to misalignment of the display 110 and the fingerprint sensor 120, by checking the position of the fingerprint sensor 120 with respect to the display 110 during the assembly operation and/or self-repair operation of the electronic device 101.

Hereinafter, a visual object displayed on the display 110 to measure the recognition performance of the fingerprint sensor 120, independent of an external object (e.g., the first external object 172 to the third external object 176 in FIG. 1) dedicated to measuring the recognition performance of the fingerprint sensor 120, will be exemplarily described with reference to FIG. 4.

FIG. 4 illustrates visual objects displayed by an electronic device 101, according to an embodiment. The electronic device 101 of FIGS. 1 to 2 and/or the processor 210 of FIG. 2 may display visual objects described with reference to FIG. 4 on a display 110. The visual objects of FIG. 4 may be displayed by the electronic device 101 performing operation 330 of FIG. 3A and/or operation 360 of FIG. 3B.

Referring to FIG. 4, visual objects 410, 415, 420, 425, 430, 435, 440, 445, 450, 455, 460, 465, and 470 displayed on a portion 362 of the display 110 superimposed on a fingerprint sensor 120 are exemplarily illustrated. The visual objects 410, 415, 420, 425, 430, 435, 440, 445, 450, 455, 460, 465, and 470 may be visualized by light outputted through the display 110. The electronic device 101 may display an image including a plurality of lines parallel to each other, such as visual objects 410, 415, 420, and 425. The electronic device 101 may display an image including a curve, such as visual objects 430 and 435. Although visual objects 430 and 435 including concentric circles or straight lines superimposed on the concentric circles are exemplarily illustrated, the embodiment is not limited thereto. For example, the electronic device 101 may display a visual object including a spiral curve. The electronic device 101 may display a visual object 440 including lines having different colors. The electronic device 101 may display visual objects 445 and 455 including circular figures. The electronic device 101 may display a visual object 445 including circles of different colors.

Referring to FIG. 4, the electronic device 101 may output light representing lines having different thicknesses, such as the visual object 450. The visual object 450 may be visualized using an image stored in the electronic device 101. The electronic device 101 may display visual objects 460 and 465 including a plurality of rectangles. The electronic device 101 may display rectangles having the same size, such as the visual object 460, or may display rectangles having different sizes, such as the visual object 465. Referring to FIG. 4, the electronic device 101 may display an image including lines having directions perpendicular to each other, such as the visual object 470.

According to an embodiment, the electronic device 101 displays any one of the visual objects 410, 415, 420, 425, 430, 435, 440, 445, 450, 455, 460, 465, and 470 illustrated in FIG. 4, or sequentially display at least two of the visual objects 410, 415, 420, 425, 430, 435, 440, 445, 450, 455, 460, 465, and 470, on the portion 362 of the display 110. While an external object having a characteristic of reflecting light is disposed on the portion 362, such as the fourth external object 178 of FIG. 1, the electronic device 101 may display at least one of the visual objects 410, 415, 420, 425, 430, 435, 440, 445, 450, 455, 460, 465, and 470. While displaying at least one of the visual objects 410, 415, 420, 425, 430, 435, 440, 445, 450, 455, 460, 465, and 470 of FIG. 4, the electronic device 101 may obtain information (e.g., an image) on light reflected from an external object by using the fingerprint sensor 120. The electronic device 101 may identify a positional relationship between the display 110 and the fingerprint sensor 120 by comparing the information with reference information and/or a reference image. Hereinafter, an operation of the electronic device 101 for identifying the positional relationship between the display 110 and the fingerprint sensor 120 will be exemplarily described with reference to FIG. 5.

FIG. 5 illustrates an example of information obtained from a fingerprint sensor 120 of an electronic device 101, according to an embodiment. The electronic device 101 of FIGS. 1 and 2 and/or the processor 210 of FIG. 2 may perform operation of the electronic device 101 described with reference to FIG. 5. The operation of the electronic device 101 of FIG. 5 may be associated with the operation 340 of FIG. 3A and/or the operation 380 of FIG. 3B.

Referring to FIG. 5, an example of an image 510 obtained using the fingerprint sensor 120 is illustrated. The image 510 may be obtained while an external object (e.g., the fourth external object 178 of FIG. 1) is positioned on at least a portion of the display 110 superimposed on the fingerprint sensor 120. The image 510 may represent light reaching the fingerprint sensor 120. The image 510 may correspond to reflected light of the external object with respect to a visual object (e.g., the visual objects 410, 415, 420, 425, 430, 435, 440, 445, 450, 455, 460, 465, and 470 of FIG. 4) displayed on the display 110.

According to an embodiment, the electronic device 101 may identify a positional relationship between the display 110 and the fingerprint sensor 120 by comparing the image 510 with a reference image. The reference image may be an image obtained using the fingerprint sensor 120 in a normal positional relationship between the display 110 and the fingerprint sensor 120. The electronic device 101 may identify the positional relationship between the display 110 and the fingerprint sensor 120, by comparing brightness for each position in the image 510 with brightness for each position in the reference image.

Referring to FIG. 5, a brightness distribution for a A-B line of the image 510 is illustrated as a line 520. The electronic device 101 may compare a brightness distribution of a position corresponding to the A-B line of the image 510 with a brightness distribution of the A-B line of the image 510, in the reference image. A line 525 illustrated with the line 520 of FIG. 5 may indicate a brightness distribution of the position corresponding to the A-B line of the image 510, in the reference image. Based on an interval between the lines 520 and 525, or a difference between the brightness distribution, the electronic device 101 may identify a positional relationship between the display 110 and the fingerprint sensor 120.

Referring to FIG. 5, a brightness distribution with respect to a C-D line of the image 510 is illustrated as a line 530.

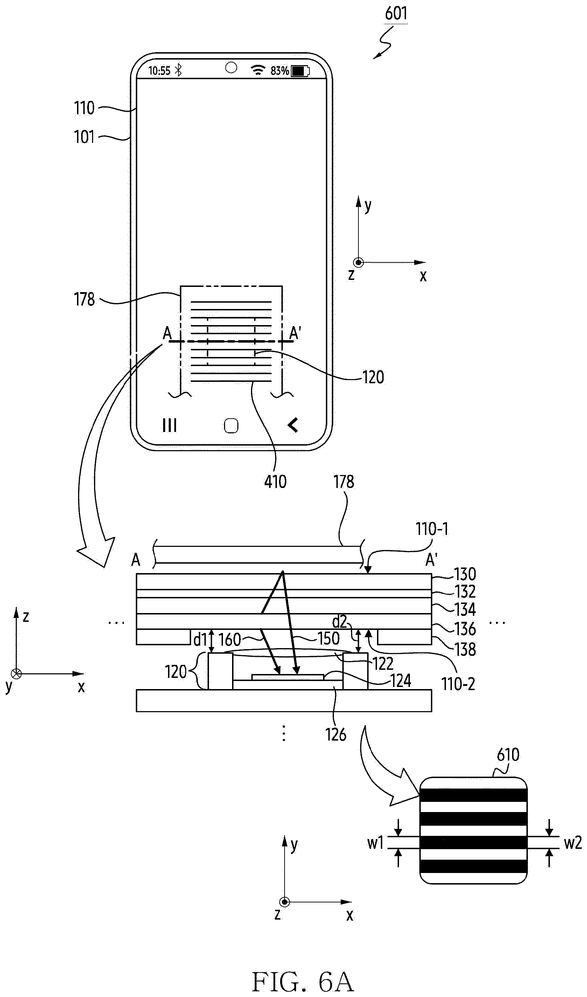

The electronic device 101 may identify the positional relationship between the display 110 and the fingerprint sensor 120 by comparing a brightness distribution of a position corresponding to the C-D line (e.g., the brightness distribution indicated as the line 535) in the reference image. When a difference between the brightness distributions is greater than a preset threshold, the processor may display a screen for rearranging the fingerprint sensor 120 with respect to the display 110, such as the third screen of operation 382 of FIG. 3B. The processor identifying misalignment of the fingerprint sensor 120 with respect to the display 110 is not limited to the operation of comparing the brightness distribution described with reference to FIG. 5. Hereinafter, an operation in which the electronic device 101 identifies the misalignment of the fingerprint sensor 120 with respect to the display 110 based on processing for the image 510 will be described with reference to FIGS. 6A to 6C.

FIGS. 6A to 6C illustrate an example of an operation in which an electronic device 101 identifies a position of a fingerprint sensor 120 with respect to a display 110 using information obtained from the fingerprint sensor 120. The electronic device 101 of FIGS. 1 to 2 and/or the processor 210 of FIG. 2 may perform an operation of the electronic device 101 described with reference to FIGS. 6A to 6C. The operation of the electronic device 101 of FIGS. 6A to 6C may be associated with the operation 340 of FIG. 3A and/or the operation 380 of FIG. 3B.

Referring to FIGS. 6A to 6C, exemplary states 601, 602, and 603 of the electronic device 101 displaying a screen including a visual object 410 for identifying a positional relationship of the display 110 and the fingerprint sensor 120 while a fourth external object 178 including white paper is positioned on a portion of the display 110 superimposed on the fingerprint sensor 120 are illustrated. The visual object 410 of FIGS. 6A to 6C may correspond to the visual object 410 of FIG. 4. The electronic device 101 may obtain reflected light with respect to the visual object 410, which is an image including lines spaced apart along a preset distance, from the fingerprint sensor 120. For example, while the fourth external object 178 is positioned on the display 110, light representing the visual object 410 may be outputted from a panel 136 of the display 110, and reflected from the fourth external object 178, and then reach the fingerprint sensor 120 along an optical path 150.

Referring to FIG. 6A, an image 610 obtained by the electronic device 101 using the fingerprint sensor 120 in a state 601 in which the display 110 and the fingerprint sensor 120 are normally disposed is illustrated. The image 610 may be included in the third information of operation 330 of FIG. 3A, and/or the information of operation 370 of FIG. 3B. In the state 601 that the display 110 and the fingerprint sensor 120 are normally disposed, a distance (e.g., d1, d2) between the fingerprint sensor 120 and the panel 136 of the display 110 may be substantially the same in all positions of the fingerprint sensor 120. In the state 601, in the image 610 including reflected light with respect to the visual object 410 including a plurality of lines, thicknesses (e.g., w1, w2) of the lines may be substantially the same in all positions of the image 610. The image 610 in the state 601 may be used as a reference image for confirming the positional relationship between the display 110 and the fingerprint sensor 120.

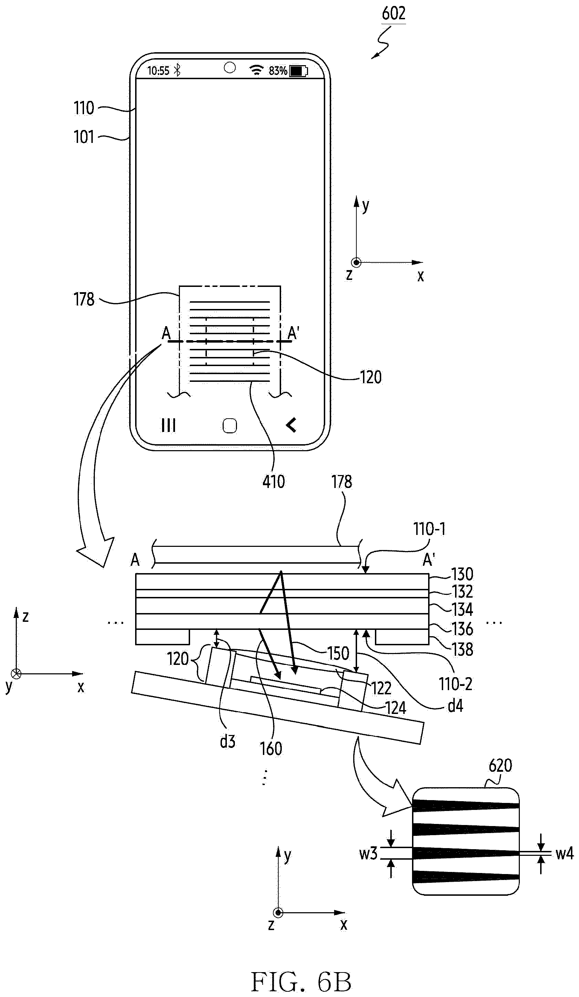

According to an embodiment, the electronic device 101 may identify the positional relationship between the display 110 and the fingerprint sensor 120, based on a distortion of the lines included in the light reflected by the fourth external object 178, indicated by the information (e.g., the image 610) obtained from the fingerprint sensor 120. The electronic device 101 identifying misalignment of the fingerprint sensor 120 with respect to the display 110 based on the position relationship may display a screen for rearranging the fingerprint sensor 120. Referring to FIG. 6B, an exemplary state 602 in which the display 110 and the fingerprint sensor 120 are abnormally positioned is illustrated. When a foreign material such as a film is disposed between the fingerprint sensor 120 and the display 110, a distance between the fingerprint sensor 120 and the display 110 may vary according to the position. For example, a distance d3 to the panel 136 of the display 110 at a point of the fingerprint sensor 120 may be different from a distance d4 to the panel 136 of the display 110 at another point of the fingerprint sensor 120.

Referring to FIG. 6B, an image 620 obtained by the electronic device 101 using the fingerprint sensor 120 in a state 602 in which the fingerprint sensor 120 is misaligned with respect to the display 110 is illustrated. Since a distance of an optical path 150 has different distances at different points of the fingerprint sensor 120, thickness of lines may be changed within the image 620 representing reflected light with respect to the visual object 410 including the lines of equal thickness. The electronic device 101 may identify a deviation of the distance between the fingerprint sensor 120 and a second surface 110-2 of the display 110 based on a deviation (e.g., w3-w4) of thicknesses of the lines included in the image 620. In the exemplary state 602 of FIG. 6B, thickness w3 of a line identified in a portion of the image 620 corresponding to a point of the fingerprint sensor 120 having a relatively close distance d3 to the second surface 110-2 may be different from thickness w4 of a line identified in another portion of the image 620 corresponding to another point of the fingerprint sensor 120 having a relatively far distance d4 from the second surface 110-2. Based on a difference between the thicknesses w3 and w4, the electronic device 101 may identify misalignment of the fingerprint sensor 120 with respect to the display 110. The electronic device 101 identifying the misalignment may guide rearrangement of the fingerprint sensor 120 with respect to the display 110 or display a screen for reassembling the fingerprint sensor 120.

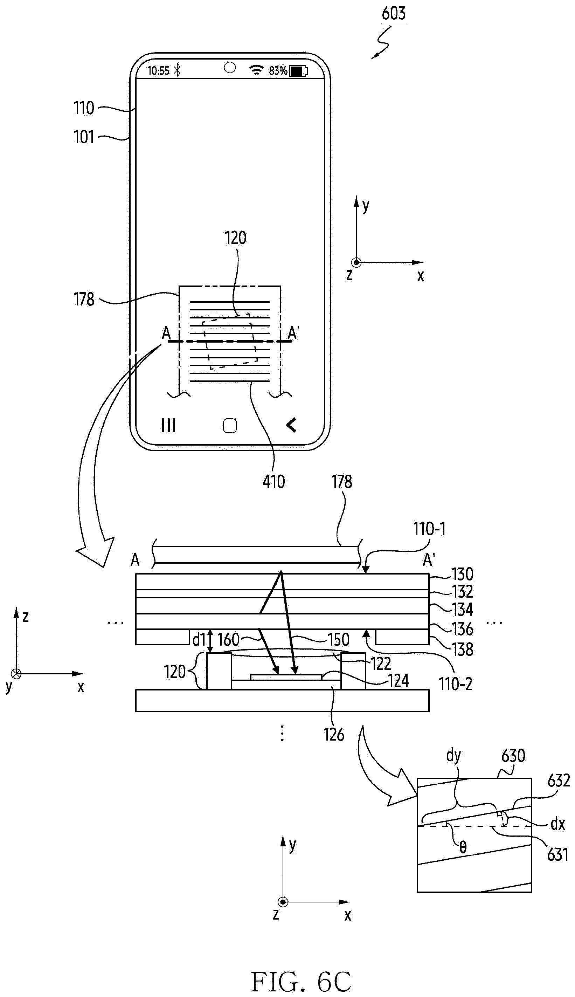

Referring to FIG. 6C, an exemplary state 603 in which the fingerprint sensor 120 disposed under the display 110 is tilted with respect to a x-y plane is illustrated. In the state 603, the electronic device 101 may identify the tilt of the fingerprint sensor 120 based on information (e.g., the image 630) obtained from the fingerprint sensor 120. For example, as the fingerprint sensor 120 is tilted, reflected light with respect to lines of the visual object 410 may be tilted within the image 630 obtained by the fingerprint sensor 120. The electronic device 101 may identify the tilt of the fingerprint sensor 120 based on an angle Θ of the line 632 with respect to a reference axis 631. For example, the electronic device 101 may identify the angle Θ of the line 632 based on Equation 1.

[Equation 1]

$$\theta = 90°(rad) - \tan^{-1}\frac{dy}{dx}$$

$$(90° = 1.5707963268\,rad)$$

Equation 1 above is merely an example to aid understanding, but is not limited thereto, and may be deformed, applied, or extended in various ways.

According to an embodiment, when the angle Θ identified based on Equation 1 exceeds a preset threshold, the electronic device 101 may identify misalignment of the fingerprint sensor 120 with respect to the display 110. The electronic device 101 identifying the misalignment may display a screen for rearranging and/or reassembling the fingerprint sensor 120 with respect to the display 110.

As described above, while displaying the visual object 410, which has a uniform thickness and includes lines parallel to each other, the electronic device 101 may identify a distance distribution between the display 110 and the fingerprint sensor 120 and/or a tilt of the fingerprint sensor 120 by using an image (e.g., images 610, 620, and 630) obtained through the fingerprint sensor 120. Based on the distance distribution and/or the tilt, the electronic device 101 may identify the misalignment of the fingerprint sensor 120 with respect to the display 110.

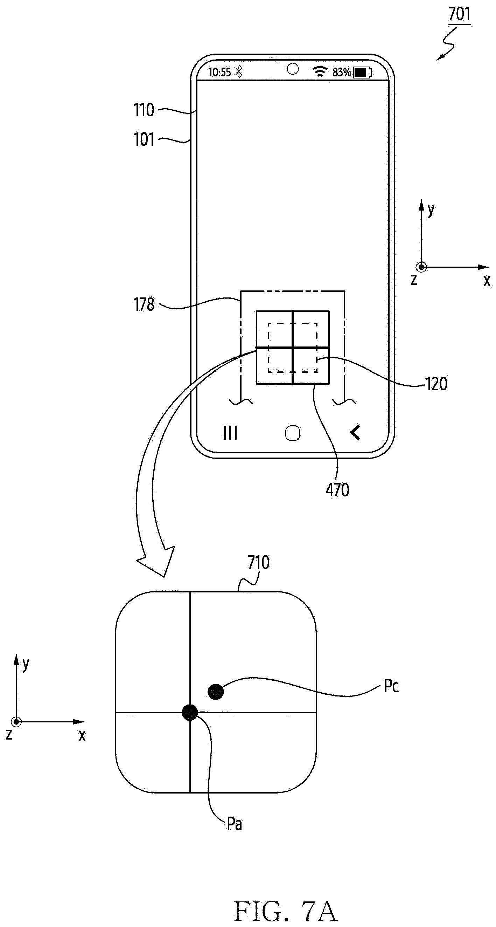

FIGS. 7A to 7B illustrate an example of an operation in which an electronic device 101 identifies a position of a fingerprint sensor 120 with respect to a display 110 using information obtained from the fingerprint sensor 120. The electronic device 101 of FIGS. 1 to 2 and/or the processor 210 of FIG. 2 may perform operation of the electronic device 101 described with reference to FIGS. 7A to 7B. The operation of the electronic device 101 of FIGS. 7A to 7B may be associated with the operation 340 of FIG. 3A and/or the operation 380 of FIG. 3B.

Referring to FIGS. 7A to 7B, exemplary states 701 and 702 of the electronic device 101 for displaying a screen including a visual object (e.g., the visual objects 470 and 430 of FIG. 4) for identifying the positional relationship of the display 110 and the fingerprint sensor 120, while the fourth external object 178 including white paper is positioned on a portion of the display 110 superimposed on the fingerprint sensor 120, are illustrated.

Referring to FIG. 7A, a state 701 of the electronic device 101 displaying a visual object 470 including lines facing directions perpendicular to each other is illustrated. The visual object 470 may be visualized by light outputted through the display 110. In the state 701, an intersection point of the lines included in the visual object 470 displayed by the electronic device 101 may be positioned on a center of the fingerprint sensor 120 when the fingerprint sensor 120 is normally positioned under the display 110. In the state 701 in which the fourth external object 178 is positioned on the display 110, the electronic device 101 may obtain an image 710 including reflected light with respect to the visual object 470, from the fingerprint sensor 120. An intersection point Pa of lines included in the image 710 may substantially match a position Pc of the center point of the fingerprint sensor 120 when the fingerprint sensor 120 is normally positioned under the display 110.

Referring to FIG. 7A, the electronic device 101 may identify misalignment of the fingerprint sensor 120 with respect to the display 110, based on a position of the intersection point Pa of the lines in the image 710. For example, the electronic device 101 that identifies the intersection point Pa spaced beyond a preset distance from the position Pc of the center point of the image 710 may identify the misalignment of the fingerprint sensor 120 with respect to the display 110. The electronic device 101 that identifies the intersection point Pa spaced apart from the position Pc of the center point of the image 710 less than the preset distance may determine that the fingerprint sensor 120 is normally disposed under the display 110. The electronic device 101 identifying the misalignment may display a screen for rearranging and/or reassembling the fingerprint sensor 120 on the display 110.

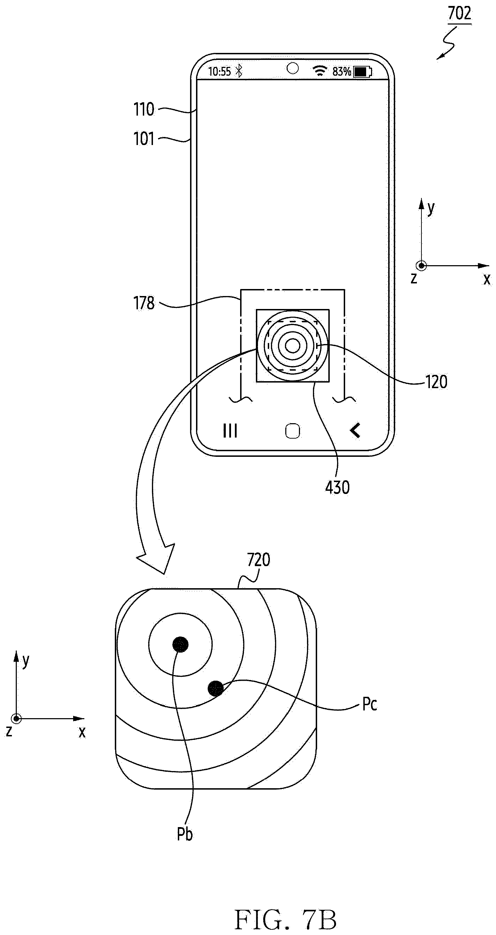

Referring to FIG. 7B, a state 702 of the electronic device 101 for displaying a visual object 430 including concentric circles is illustrated. In the state 702, the electronic device 101 may output light representing the visual object 430 through the display 110. In the state 702, a center of the concentric circles displayed by the electronic device 101 may be positioned on a center of the fingerprint sensor 120 when the fingerprint sensor 120 is normally positioned under the display 110. In the state 702 that the fourth external object 178 is positioned on the display 110, the electronic device 101 may obtain an image 720 including reflected light with respect to the visual object 430 from the fingerprint sensor 120.

According to an embodiment, the electronic device 101 may identify the misalignment of the fingerprint sensor

120 with respect to the display 110, by comparing a position of a center point Pb of the concentric circles and a position Pc of a center point of the image 720 in the image 720. When the center point Pb is positioned beyond the preset distance from the position Pc, the electronic device 101 may display a screen for reassembling and/or rearranging the fingerprint sensor 120. When the center point Pb is positioned less than the preset distance from the position Pc, the electronic device 101 may determine that the fingerprint sensor 120 is normally disposed under the display 110.

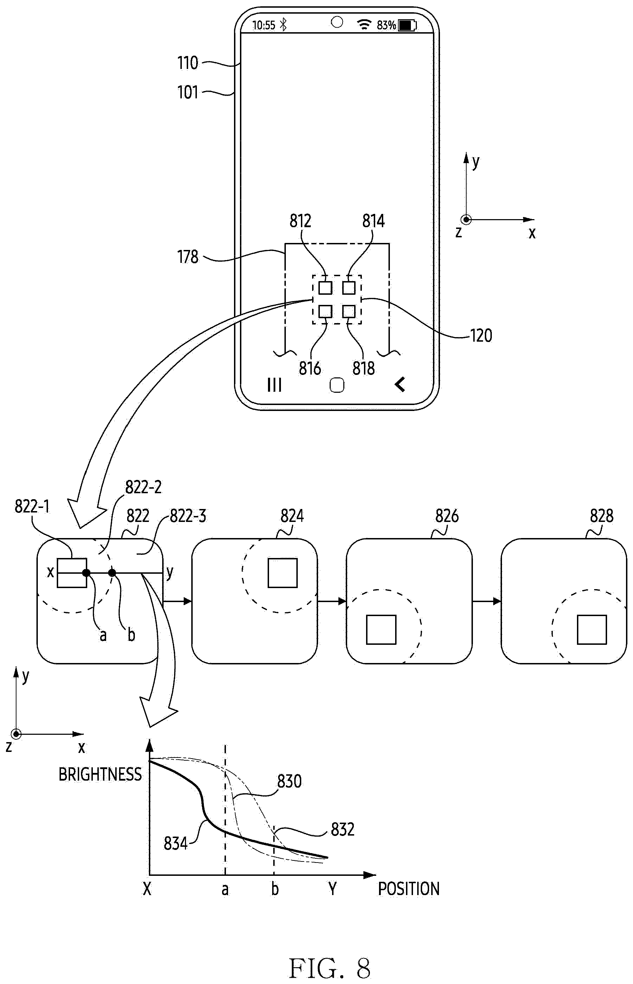

As described above, according to an embodiment, the electronic device 101 may identify the misalignment of the fingerprint sensor 120 with respect to the display 110, by using a visual object (e.g., the visual objects 430 and 470) having a shape for identifying a position of the fingerprint sensor 120 disposed under the display 110. Hereinafter, an operation of the electronic device 101 for identifying reception sensitivity of each part of the fingerprint sensor 120 will be described with reference to FIG. 8.

FIG. 8 illustrates an example of an operation of an electronic device 101 sequentially displaying a plurality of visual objects 812, 814, 816, and 818 on a display 110. The electronic device 101 of FIGS. 1 to 2 and/or the processor 210 of FIG. 2 may perform operation of the electronic device 101 described with reference to FIG. 8. The operation of the electronic device 101 of FIG. 8 may be associated with the operation 340 of FIG. 3A and/or the operation 380 of FIG. 3B.

Referring to FIG. 8, the electronic device 101 may output light through a portion of the fingerprint sensor 120, in order to identify sensitivity and/or contrast of a portion and/or a specific position of the fingerprint sensor 120. A position at which light is outputted may be changed over time. For example, in order to identify sensitivity and/or contrast of a specific position and/or a portion of the fingerprint sensor 120, the electronic device 101 may sequentially display visual objects 812, 814, 816, and 818 corresponding to a portion of the fingerprint sensor 120. The visual objects 812, 814, 816, and 818 may be displayed on a portion of the display 110 superimposed on the fingerprint sensor 120. The visual objects 812, 814, 816, and 818 may have different positions on the fingerprint sensor 120. The visual objects 812, 814, 816, and 818 may include a rectangular figure having a preset color and/or preset brightness. According to an embodiment, the electronic device 101 may change a position in the display 110 of the rectangular figure in the display 110 based on a preset period.

Referring to FIG. 8, in a portion of the display 110 corresponding to the fingerprint sensor 120, the electronic device 101 may sequentially display the visual objects 812, 814, 816, and 818. The electronic device 101 may obtain images 822, 824, 826, and 828 using the fingerprint sensor 120, while each of the visual objects 812, 814, 816, and 818 is displayed. The electronic device 101 may display the visual objects 812, 814, 816, and 818, and/or obtain the images 822, 824, 826, and 828, while a fourth external object 178 including white paper is positioned on the display 110.

Referring to FIG. 8, an image 822 obtained by the fingerprint sensor 120 while displaying the visual object 812 is exemplarily illustrated. In the image 822, reflected light of the visual object 812 with respect to the fourth external object 178 may be included centering on a portion 822-1 of the fingerprint sensor 120 positioned under the visual object 812. For example, the reflected light may be included up to a peripheral portion 822-2 including the portion 822-1.

According to an embodiment, the electronic device 101 may identify reception sensitivity for each portion of the fingerprint sensor 120 based on brightness distribution in the image 822. A line 830 of FIG. 8 may represent brightness distribution of a x-y line of the image 822 when the fingerprint sensor 120 is normally positioned under the display 110. When brightness rapidly decreases at the portion 822-1 of the fingerprint sensor 120 positioned under the visual object 812, such as the line 834, or brightness has a relatively high value up to the peripheral portion 822-2, such as the line 832, the electronic device 101 may identify a characteristic in a portion of the fingerprint sensor 120 corresponding to the visual object 812. The characteristic may include thickness of the display 110 positioned on the portion and a transmission characteristic of the display 110 on the portion. Based on the characteristic, the electronic device 101 may identify misalignment of the fingerprint sensor 120 with respect to the display 110 and/or a foreign material between the display 110 and the fingerprint sensor 120. Based on the characteristic, the electronic device 101 may identify a scratch of the display 110 and/or the fingerprint sensor 120 and/or a defect of the fingerprint sensor 120.

Similarly, the electronic device 101 may identify reception sensitivity and/or characteristic at different portions of the fingerprint sensor 120, based on brightness distribution of the images 824, 826, and 828 obtained while displaying the other visual objects 814, 816, and 818. Based on the reception sensitivity and/or characteristic, the electronic device 101 may identify the misalignment of the display 110 and the fingerprint sensor 120.

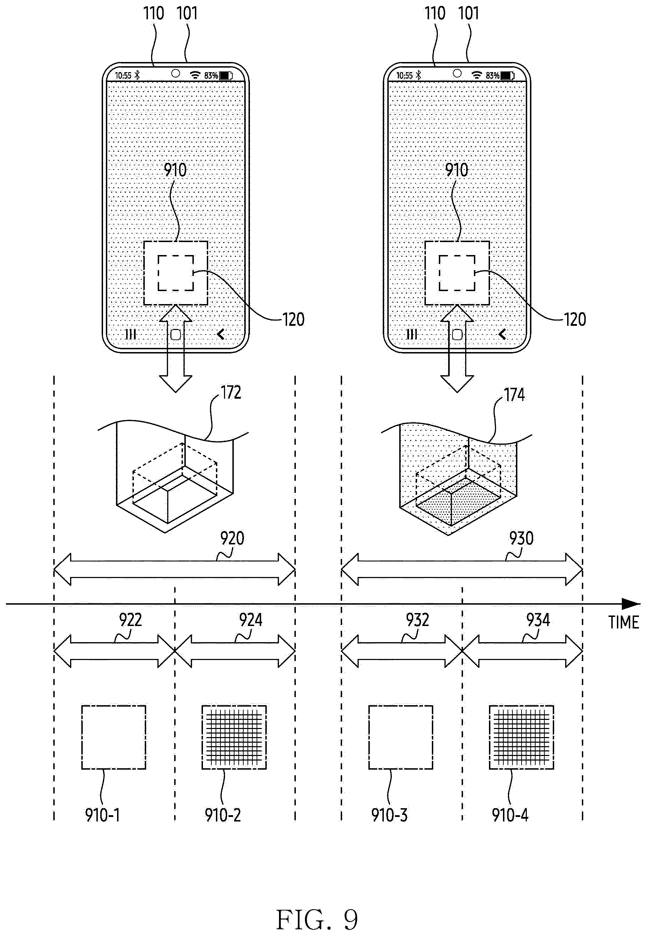

Displaying different visual objects by the electronic device 101 over time is not limited to an embodiment of FIG. 8. Hereinafter, an operation of the electronic device 101 for displaying different visual objects over time will be described with reference to FIG. 9.

FIG. 9 illustrates an example of a timing diagram for describing visual objects displayed by an electronic device 101. The electronic device 101 of FIGS. 1 and 2 and/or the processor 210 of FIG. 2 may perform operation of the electronic device 101 described with reference to FIG. 9. The operation of the electronic device 101 of FIG. 9 may be associated with the operation 340 of FIG. 3A and/or the operation 380 of FIG. 3B.

Referring to FIG. 9, in a time period 920, a first external object 172, which is a reflector, may be positioned on a portion 910 of the display 110 superimposed on the fingerprint sensor 120. The electronic device 101 may display a screen guiding to move the first external object 172 onto the display 110. In the time period 920, the electronic device 101 may display a visual object for obtaining reflected light with respect to the first external object 172 on the portion 910 of the display 110 superimposed on the fingerprint sensor 120. For example, in a time period 922 within the time period 920, the electronic device 101 may display a visual object 910-1 including the whole of a portion of the display 110 superimposed on the fingerprint sensor 120 and having a preset color and/or brightness. In the time period 922 in which the visual object 910-1 is displayed, the electronic device 101 may obtain an image from the fingerprint sensor 120 to obtain the first information of the operation 310 of FIG. 3A. In a time period 924 within the time period 920, the electronic device 101 may display a visual object 910-2 corresponding to the visual object 425 of FIG. 4. In the time period 924 in which the visual object 910-2 is displayed, the electronic device 101 may obtain an image from the fingerprint sensor 120 to obtain the third information of the operation 330 of FIG. 3A. Information obtained through the fingerprint sensor 120 during the time period 920 may be used to identify an exposure time, maximum light amount condition, and/or noise of the fingerprint sensor 120. Information obtained through the fingerprint sensor 120 during the time period 924 may be used to identify a positional relationship (or misalignment) of the display 110 and the fingerprint sensor 120.

Referring to FIG. 9, in a time period 930, the second external object 174, which is an absorber, may be positioned on the portion 910 of the display 110 superimposed on the fingerprint sensor 120. The electronic device 101 may display a screen guiding to move the second external object 174 onto the portion 910. In the time period 930, the electronic device 101 may display a visual object for obtaining reflected light with respect to the second external object 174, on the part 910. For example, in a time period 932 within the time section 930, the electronic device 101 may display a visual object 910-3 including the whole of the portion 910 and having a preset color and/or brightness. In the time period 932 in which the visual object 910-3 is displayed, the electronic device 101 may control the fingerprint sensor 120 to obtain the second information of the operation 320 of FIG. 3A. In a time period 934 within the time period 930, the electronic device 101 may display a visual object 910-4 corresponding to the visual object 425 of FIG. 4. In the time period 934 in which the visual object 910-4 is displayed, the electronic device 101 may obtain an image by controlling the fingerprint sensor 120 to obtain the third information of the operation 330 of FIG. 3A. The information obtained during the time period 930 may be used to identify the minimum light amount condition and/or noise of the fingerprint sensor 120. The information obtained through the fingerprint sensor 120 during the time period 934 may be used to identify a positional relationship between the display 110 and the fingerprint sensor 120.

Hereinafter, an operation of an electronic device (e.g., the electronic device 101-2 of FIG. 2) including a deformable flexible display will be described with reference to FIGS. 10A to 10B.

FIGS. 10A to 10B illustrate an example of an operation of an electronic device 101-2 including a deformable housing. The electronic device 101-2 and/or the processor 210 of FIG. 2 may perform operation of the electronic device 101-2 described with reference to FIGS. 10A to 10B. The operation of the electronic device 101-2 of FIGS. 10A to 10B may be associated with at least one of the operations of FIGS. 3A to 3B.

Referring to FIGS. 10A to 10B, different states 1001 and 1002 of the electronic device 101-2 distinguished by a deformable housing and/or a flexible display 1020 are illustrated. A housing of the electronic device 101-2 may include a first housing 1011 and a second housing 1012 rotatably coupled with respect to the first housing 1011. The housing of the electronic device 101-2 may include a hinge assembly 1013 for rotatably coupling the first housing 1011 and the second housing 1012. Based on a folding axis F included in the hinge assembly 1013, the electronic device 101-2 may have a foldable structure. The electronic device 101-2 may include the flexible display 1020 disposed on the first housing 1011 and the second housing 1012. The flexible display 1020 of the electronic device 101-2 may be an example of the display 110 of FIG. 2.

According to an embodiment, a state of the electronic device 101-2 may be divided by an angle of the first housing 1011 and the second housing 1012 that are foldable based on the folding axis F. In order to detect the angle, the electronic device 101-2 may include a hall sensor and/or an inertial measurement unit (IMU). The electronic device 101-2 may compare the angle of the second housing 1012 with respect to the first housing 1011 measured by the sensor and preset angle ranges. Based on an angle range including an angle measured by the sensor from among the preset angle ranges, the electronic device 101-2 may identify a state and/or shape of the electronic device 101-2.

For example, a first preset range may be a range (e.g., a range greater than or equal to about 0 ° and less than or equal to about 10 °) including about 0 °. A folded state and/or a closed state may indicate that an angle of the first housing 1011 and the second housing 1012, which are folded based on the folding axis F, is within the first preset range. A second preset range different from the first preset range may be formed within an angle less than or equal to about 90 ° (e.g., a range greater than or equal to about 21 ° and less than or equal to about 90 °). Padding based on hysteresis of the sensor may be formed, between the first preset range and the second preset range (e.g., a range greater than or equal to about 11 ° and less than or equal to about 20 °). A sub-fold state, a sub-closed state, a tent state, and/or an acute angle state may indicate that the angle of the first housing 1011 and the second housing 1012 is within the second preset range. A third preset range different from the first preset range to the second preset range may be formed within an angle greater than or equal to about 90 ° (e.g., a range greater than or equal to 91 ° and less than or equal to 130 °). A sub-folded state, a sub-open state, and/or an obtuse angle state may indicate that the angle of the first housing 1011 and the second housing 1012 is within the third preset range. A fourth preset range different from the first preset range to the third preset range may be a range including about 180 ° (e.g., a range greater than or equal to about 131 ° and less than or equal to about 180 °). An unfolded state, an open state, and/or a straight angle state may indicate that the angle of the first housing 1011 and the second housing 1012 is within the fourth preset range.

According to an embodiment, the electronic device 101-2 may include the fingerprint sensor 120 superimposed on the flexible display 1020 in a surface of the second housing 1012 in which the flexible display 1020 is disposed. In terms of looking at a front surface of the flexible display 1020, the fingerprint sensor 120 may be disposed under the flexible display 1020. According to an embodiment, as described above with reference to FIGS. 1 to 9, the electronic device 101-2 may output light used to obtain information on a fingerprint based on the fingerprint sensor 120 through the flexible display 1020.

According to an embodiment, the electronic device 101-2 may execute an application (e.g., the diagnosis application 230 of FIG. 2) for identifying a positional relationship between the flexible display 1020 and the fingerprint sensor 120. In the state 1001 of FIG. 10A, the electronic device 101-2 may display a screen provided from the application on the flexible display 1020. The electronic device 101-2 may display a visual object 1030 to guide the electronic device 101-2 to switch to the folded state. Referring to FIG. 10A, a visual object 1030 including preset text such as 'It starts when folding the device' is illustrated as an example, but the embodiment is not limited thereto.

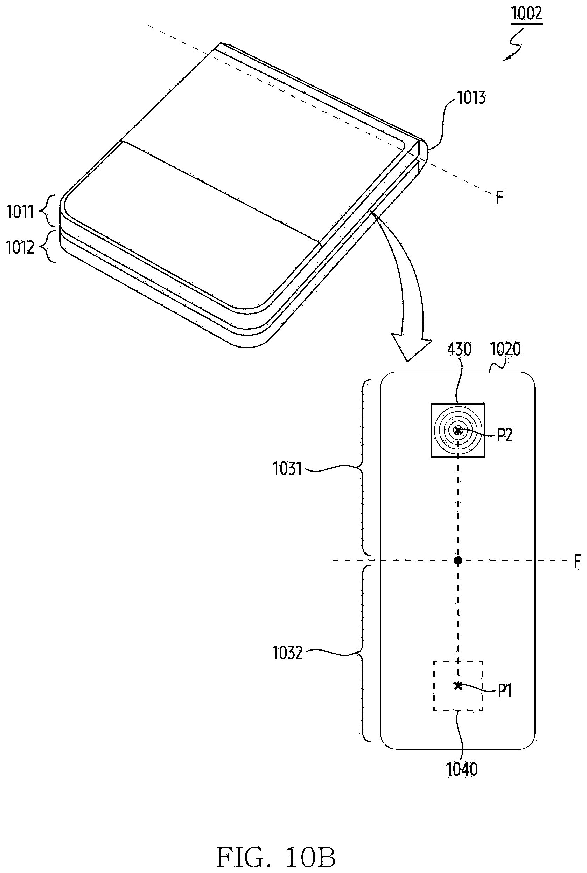

In the state 1001 of FIG. 10A, when the angle of the first housing 1011 and the second housing 1012 is included in the first preset angle range corresponding to the folded state by a rotation of the second housing 1012 with respect to the first housing 1011, the electronic device 101-2 may switch to the state 1002 of FIG. 10B. For example, while the angle between the first housing 1011 and the second housing 1012 is included within the first preset angle range less than a preset angle for the folded state, the electronic device 101-2 may display a screen including light facing the fingerprint sensor 120 on the flexible display 1020. Referring to FIG. 10B, an example of a screen displayed by the electronic device 101-2 is illustrated.

Referring to FIG. 10B, while a first portion 1031 of the flexible display 1020 disposed in the first housing 1011 and a second portion 1032 of the flexible display 1020 disposed in the second housing 1012 face each other substantially based on the folded state, the electronic device 101-2 may display a visual object 430 in a position symmetrical to a portion 1040 of the flexible display 1020 superimposed on the fingerprint sensor 120 based on the folding axis f. In the folded state, light with respect to the visual object 430 may pass through the portion 1040 and propagate to the fingerprint sensor 120. Although the visual object 430 is exemplarily illustrated, the embodiment is not limited thereto. For example, the electronic device 101-2 may display at least one of the visual objects 410, 415, 420, 425, 430, 435, 440, 445, 450, 455, 460, 465, and 470 of FIG. 4 at a position P2 symmetrical to the portion 1040 based on the folding axis F. Referring to FIG. 10B, a position P1 of a center of the portion 1040 of the flexible display 1020 superimposed on the fingerprint sensor 120 may be symmetrical with respect to a position P2 of a center of a portion of the flexible display 1020 where the visual object 430 is displayed, based on the folding axis F. For example, the electronic device 101-2 may display a visual object described above with reference to FIGS. 8 to 9 at the position.

Referring to FIG. 10B, while displaying a screen including the visual object 430, the electronic device 101-2 may obtain information on light received by the fingerprint sensor 120. The electronic device 101-2 may identify a positional relationship between the flexible display 1020 and the fingerprint sensor 120 based on the information. Based on the position relationship, the electronic device 101-2 may identify misalignment of the fingerprint sensor 120 with respect to the flexible display 1020. For example, the electronic device 101-2 may identify the misalignment of the fingerprint sensor 120 with respect to the flexible display 1020, based on the operation described with reference to FIGS. 3A to 3B and 4 to 9. The electronic device 101-2 identifying the misalignment may display a screen for guiding a change in the position of the fingerprint sensor 120 with respect to the flexible display 1020 on the flexible display 1020.

As described above, the electronic device 101-2 including the flexible display 1020 may display the visual object 430 at a first position of the flexible display 1020. The first position may be included in the first portion 1031 of the flexible display 1020. The first position may be symmetrical to a second position of the flexible display 1020 superimposed on the fingerprint sensor 120 based on the folding axis F connecting the first housing 1011 and the second housing 1012. The electronic device 101-2 obtaining an image for the visual object 430 displayed in the folded state from the fingerprint sensor 120 may identify at least one of magnification of the fingerprint sensor 120, a tilt of the fingerprint sensor 120, a position of the fingerprint sensor 120 with respect to the flexible display 1020, and/or reception sensitivity at different portions of the fingerprint sensor 120.

FIG. 11 illustrates a flowchart of an electronic device according to an embodiment. The electronic device 101 of FIGS. 1 and 2 and/or the processor 210 of FIG. 2 may perform operation described with reference to FIG. 11. The operation of FIG. 11 may be associated with the operation of FIGS. 3A to 3B.

In the following embodiment, each operation may be performed sequentially, but is not necessarily performed sequentially. For example, the sequence of each operation may be changed, and at least two operations may be performed in parallel.

Referring to FIG. 11, in operation 1110, according to an embodiment, a processor of an electronic device may display a first screen for outputting light toward an external object. An external object of operation 1110 may include the first external object 172 to the fourth external object 178 of FIG. 1. The processor may output light to an external object that is not dedicated to identifying a positional relationship between a display (e.g., the display 110 of FIGS. 1 to 9 and/or the flexible display 1020 of FIGS. 10A to 10B) and a fingerprint sensor (e.g., the fingerprint sensor 120 of FIGS. 1 to 9, and 10A to 10B), such as white paper. In operation 1110, the processor may output light for identifying a positional relationship between the display and the fingerprint sensor through the display. In operation 1110, the output light may include a specified pattern to identify misalignment of the fingerprint sensor with respect to the display. In operation 1110, the processor may display a first screen including at least one of the visual objects 410, 415, 420, 425, 430, 435, 440, 445, 450, 455, 460, 465, and 470 of FIG. 4. In the first screen, the processor may display at least one of the visual objects 410, 415, 420, 425, 430, 435, 440, 445, 450, 455, 460, 465, and 470 of FIG. 4 on a portion of the display superimposed on the fingerprint sensor. The processor may sequentially display a plurality of visual objects on the portion of the display superimposed on the fingerprint sensor, as shown in FIG. 8. When the electronic device has a deformable structure as shown in FIGS. 2 and 10A to 10B, the processor may display at least one of the visual objects 410, 415, 420, 425, 430, 435, 440, 445, 450, 455, 460, 465, and 470 of FIG. 4 at a position (e.g., the position of the flexible display 1020 of FIG. 10B in which the visual object 430 is displayed) corresponding to the fingerprint sensor in the first screen.

Referring to FIG. 11, in operation 1120, according to an embodiment, while the first screen of operation 1110 is displayed, the processor of the electronic device may obtain information on light received by the fingerprint sensor. In operation 1120, the processor of the electronic device may obtain information by sensing light that is reflected by the external object on the display and is outputted to display the specified pattern, by using the fingerprint sensor. The information may include an image obtained by the fingerprint sensor. The image may include light representing a visual object included in the first screen. As described above with reference to FIGS. 5 to 9, the light may include light reflected from an external object positioned on a display superimposed on the fingerprint sensor. As described above with reference to FIGS. 10A to 10B, the light may include light outputted from another portion symmetrical to the portion of the display superimposed on the fingerprint sensor.

Referring to FIG. 11, in operation 1130, according to an embodiment, the processor of the electronic device may display a second screen for guiding a change in a position of the fingerprint sensor with respect to the display, based on the information in operation 1120. The processor may identify the positional relationship between the display and the fingerprint sensor from the information of operation 1120, based on the operation described with reference to FIGS. 3A to 3B and 4 to 9. In operation 1130, the processor may identify misalignment of the fingerprint sensor with respect to the display based on the information obtained in operation 1120 and the information about the specified pattern, e.g., by comparing the obtained information with the reference information of the specified pattern. In this manner, the misalignment of the fingerprint sensor with respect to the display can be accurately and efficiently identified. The processor that identifies misalignment of the display and the fingerprint sensor based on the position relationship may display the second screen of operation 1130. The second screen of operation 1130 may include a visual object for guiding rearrangement and/or reassembly of the fingerprint sensor. The second screen of operation 1130 may include a visual object (e.g., a visual object capable of selecting a date and/or text with contact information) for booking a repair service provided by a vendor of the electronic device.

As described above, according to an embodiment, the electronic device may prevent recognition performance of the fingerprint sensor from being deteriorated by the misalignment, by identifying the misalignment of the fingerprint sensor and the display that may occur during assembly and/or self-repair operation. Independent of an external object (e.g., the first external object 172 to the third external object 176 in FIG. 2) dedicated to identifying the positional relationship of the fingerprint sensor and the display, the electronic device may reduce an error that may be caused by the external object by identifying the misalignment.

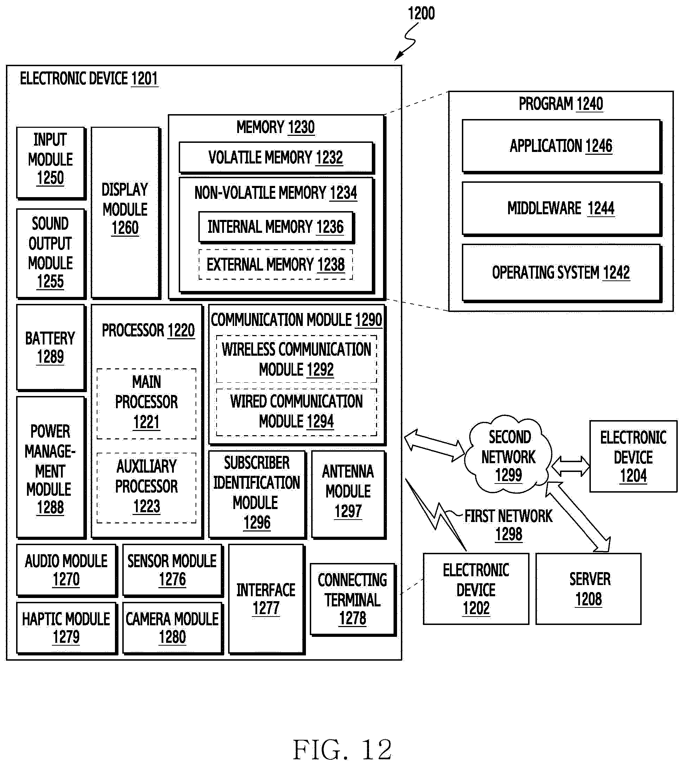

FIG. 12 is a block diagram illustrating an electronic device 1201 in a network environment 1200 according to various embodiments. The electronic device 1201 of FIG. 12 may comprise the electronic device of FIGS. 1 to 11. Referring to FIG. 12, the electronic device 1201 in the network environment 1200 may communicate with an electronic device 1202 via a first network 1298 (e.g., a short-range wireless communication network), or at least one of an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module(SIM) 1296, or an antenna module 1297. In some embodiments, at least one of the components (e.g., the connecting terminal 1278) may be omitted from the electronic device 1201, or one or more other components may be added in the electronic device 1201. In some embodiments, some of the components (e.g., the sensor module 1276, the camera module 1280, or the antenna module 1297) may be implemented as a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to an embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 1221. For example, when the electronic device 1201 includes the main processor 1221 and the auxiliary processor 1223, the auxiliary processor 1223 may be adapted to consume less power than the main processor 1221, or to be specific to a specified function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 1223. According to an embodiment, the auxiliary processor 1223 (e.g., the neural processing unit) may include a hardware structure specified for artificial intelligence model processing. An artificial intelligence model may be generated by machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by another component (e.g., the processor 1220) of the electronic device 1201, from the outside (e.g., a user) of the electronic device 1201. The input module 1250 may include, for example, a microphone, a mouse, a keyboard, a key (e.g., a button), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display module 1260 may include, for example, a display, a hologram device, or a projector and control circuitry to control a corresponding one of the display, hologram device, and projector. According to an embodiment, the display module 1260 may include a touch sensor adapted to detect a touch, or a pressure sensor adapted to measure the intensity of force incurred by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 1201, and then generate an electrical signal or data value corresponding to the detected state. According to an embodiment, the sensor module 1276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or a movement) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device via the first network 1298 (e.g., a short-range communication network, such as Bluetooth™, wireless-fidelity (Wi-Fi) direct, or infrared data association (IrDA)) or the second network 1299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1292 may identify and authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 1264dB or less) for implementing mMTC, or U-plane latency (e.g., 0.5ms or less for each of downlink (DL) and uplink (UL), or a round trip of 12ms or less) for implementing URLLC.

The antenna module 1297 may transmit or receive a signal or power to or from the outside (e.g., the external electronic device) of the electronic device 1201. According to an embodiment, the antenna module 1297 may include an antenna including a radiating element composed of a conductive material or a conductive pattern formed in or on a substrate (e.g., a printed circuit board (PCB)). According to an embodiment, the antenna module 1297 may include a plurality of antennas (e.g., array antennas). In such a case, at least one antenna appropriate for a communication scheme used in the communication network, such as the first network 1298 or the second network 1299, may be selected, for example, by the communication module 1290 (e.g., the wireless communication module 1292) from the plurality of antennas. The signal or the power may then be transmitted or received between the communication module 1290 and the external electronic device via the selected at least one antenna. According to an embodiment, another component (e.g., a radio frequency integrated circuit (RFIC)) other than the radiating element may be additionally formed as part of the antenna module 1297.

According to various embodiments, the antenna module 1297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1201 and the external electronic device 1204 via the server 1208 coupled with the second network 1299. Each of the electronic devices 1202 or 1204 may be a device of a same type as, or a different type, from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 1204 may include an internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 1201). For example, a processor (e.g., the processor 1220) of the machine (e.g., the electronic device 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In an embodiment, a method of identifying misalignment of a fingerprint sensor and a display included in the electronic device may be required. As described above, according to an embodiment, an electronic device (e.g., the electronic device 101 of FIGS. 1 to 9) may comprise a display (e.g., the display 110 of FIGS. 1 to 9), a fingerprint sensor (e.g., the fingerprint sensor 120 of FIGS. 1 to 9) disposed under a second surface (e.g., the second surface 110-2 of FIG. 1) of the display, and at least one processor (e.g., the processor 210 of FIG. 2). The at least one processor may be configured to display a first screen including at least one image for obtaining reflection light with respect to an external object (e.g., the first external object 172 to the fourth external object 174 of FIG. 1) on the display. The at least one processor may be configured to obtain information on light reflected by the external object using the fingerprint sensor, while outputting light corresponding to the at least one image toward the external object based on the first screen. The at least one processor may be configured to display a second screen for guiding reassembly of the fingerprint sensor, in response to identifying the misalignment of the fingerprint sensor with respect to the display based on the information. According to an embodiment, the electronic device may identify the misalignment of the fingerprint sensor and the display by using the first screen for identifying a positional relationship between the fingerprint sensor and the display. In this manner, the misalignment of the fingerprint sensor and the display can be accurately and efficiently identified. Further technical effects and advantages are readily apparent upon the overall understanding of the present invention.

For example, the at least one processor may be configured to display the first screen including the at least one image including lines spaced apart along a preset distance. Such preset image(s) facilitates the misalignment identification and enhances the accuracy thereof.

For example, the at least one processor may be configured to determine whether to display the second screen, based on distortion of the lines included in light reflected by the external object, indicated by the information.

For example, the at least one processor may be configured to identify a deviation of a distance between the fingerprint sensor and a surface of the display based on a deviation of thickness of the lines.

For example, the at least one processor may be configured to identify a tilt of the fingerprint sensor, based on angles of the lines with respect to a reference axis, indicated by the information. Thus, the electronic device can efficiently identify various types of the misalignment of the fingerprint sensor and the display, which includes but not limited to a distance deviation and/or a tilt.

For example, the at least one processor may be configured to change a position of the at least one image in the first screen, based on a preset period within the first screen.

For example, the at least one processor may be configured to change a position of the at least one image within a portion of the display corresponding to the fingerprint sensor. As a result, the electronic device can accurately identify the misalignment by thoroughly covering the region corresponding to the fingerprint sensor.

For example, the at least one processor may be configured to display the second screen based on identifying thickness of the display disposed on the fingerprint sensor or a film between the display and the fingerprint sensor based on the information.

As described above, according to an embodiment, a method of an electronic device may comprise displaying (e.g., operation 1110 of FIG. 11) a first screen including at least one image for obtaining reflection light with respect to an external object on a display. The method may comprise obtaining (e.g., operation 1120 of FIG. 11) information on light reflected by the external object using a fingerprint sensor disposed under the display, while outputting light corresponding to the at least one image toward the external object based on the first screen. The method may comprise displaying (e.g., operation 1130 of FIG. 11) a second screen for guiding reassembly of the fingerprint sensor, in response to identifying misalignment of the fingerprint sensor with respect to the display based on the information.

For example, the displaying the first screen may comprise displaying the first screen including the at least one image including lines spaced apart along a preset distance.

For example, the obtaining may comprise determining whether to display the second screen, based on distortion of the lines included in light reflected by the external object, indicated by the information.

For example, the determining may comprise identifying a deviation of a distance between the fingerprint sensor and a surface of the display based on a deviation of thickness of the lines.

For example, the determining may comprise identifying a tilt of the fingerprint sensor, based on angles of the lines with respect to a reference axis, indicated by the information.

For example, the displaying the first screen may comprise changing a position of the at least one image in the first screen, based on a preset period within the first screen.

For example, the displaying the first screen may comprise changing a position of the at least one image within a portion of the display corresponding to the fingerprint sensor.

For example, the displaying the first screen may comprise displaying the second screen based on identifying thickness of the display disposed on the fingerprint sensor or a film between the display and the fingerprint sensor based on the information.

As described above, according to an embodiment, an electronic device (e.g., the electronic device 101 of FIGS. 1 to 9) may comprise a first housing (e.g., the first housing 1011 of FIGS. 10A to 10B), a second housing (e.g., the second housing 1012 of FIGS. 10A to 10B) rotatably coupled with respect to the first housing, a flexible display (e.g., the flexible display 1020 of FIGS. 10A to 10B) disposed on the first housing and the second housing, a fingerprint sensor (e.g., the fingerprint sensor 120 of FIG. 10A) superimposed with the flexible display in a surface of the second housing in which the flexible display is disposed, and at least one processor (e.g., the processor 210 of FIG. 2). The at least one processor may be configured to display a first screen including light facing the fingerprint sensor on the flexible display, while an angle between the first housing and the second housing is included in an angle range less than a preset angle. The processor may be configured to obtain information on the light received by the fingerprint sensor while displaying the first screen. The processor may be configured to display a second screen for guiding reassembly of the fingerprint sensor, based on identifying misalignment of the fingerprint sensor with respect to the flexible display based on the information.

For example, the at least one processor may be configured to display the first screen configured to display a visual object in a first position of the flexible display. The first position in the first screen and a second position of the second housing in which the fingerprint sensor is disposed may be symmetrical with respect to a folding axis connecting the first housing and the second housing.

For example, the at least one processor may be configured to display the visual object including a plurality of lines spaced apart along a preset distance.

For example, the at least one processor may be configured to identify a position of the fingerprint sensor with respect to the flexible display, based on an interval or thickness of the plurality of lines, indicated by the information.

As described above, according to an embodiment, a method of an electronic device may comprise displaying a first screen including light facing a fingerprint sensor of the electronic device on a flexible display disposed on a first housing and a second housing, while an angle between a first housing and a second housing is included in an angle range less than a preset angle. The method may comprise obtaining information on the light received by the fingerprint sensor while displaying the first screen. The method may comprise displaying a second screen for guiding reassembly of the fingerprint sensor, based on identifying misalignment of the fingerprint sensor with respect to the flexible display based on the information.

For example, the displaying the first screen may comprise displaying the first screen configured to display a visual object in a first position of the flexible display. The first position in the first screen and a second position of the second housing in which the fingerprint sensor is disposed may be symmetrical with respect to a folding axis connecting the first housing and the second housing.

For example, the displaying the visual object may comprise displaying the visual object including a plurality of lines spaced apart along a preset distance.

For example, the obtaining may comprise identifying a position of the fingerprint sensor with respect to the flexible display, based on an interval or thickness of the plurality of lines, indicated by the information.

As described above, according to an embodiment, an electronic device may comprise a display, a fingerprint sensor disposed under the display for sensing light that is penetrated through the display and is reflected by an external object on the display, memory storing instructions, and at least one processor. The instructions, when executed by the at least one processor, may cause the electronic device to output light in which a specified pattern to identify misalignment of the fingerprint sensor with respect to the display is included. The instructions, when executed by the at least one processor, may cause the electronic device to obtain information by sensing light that is reflected by the external object on the display and is outputted to display the specified pattern, by using the fingerprint sensor. The instructions, when executed by the at least one processor, may cause the electronic device to identify misalignment of the fingerprint sensor with respect to the display based on obtained information and information with respect to the specified pattern.

For example, the instructions, when executed by the at least one processor, may cause the electronic device to output the light representing lines separated along a preset distance.

For example, the instructions, when executed by the at least one processor, may cause the electronic device to determine the misalignment, based on distortion of the lines represented by the light reflected by the external object that is indicated by the information obtained by using the fingerprint sensor.

For example, the instructions, when executed by the at least one processor, may cause the electronic device to identify deviation of a distance between the fingerprint sensor and a surface of the display based on deviations of thicknesses of the lines.

For example, the instructions, when executed by the at least one processor, may cause the electronic device to identify a tilt of the fingerprint sensor based on angles of lines with respect to a reference axis that is indicated by the information obtained by using the fingerprint sensor.

For example, the instructions, when executed by the at least one processor, may cause the electronic device to change a position of the specified pattern represented by the light based on a preset period.

For example, the instructions, when executed by the at least one processor, may cause the electronic device to change a position of the specified pattern represented by the light in a portion of the display corresponding to the fingerprint sensor.

For example, the instructions, when executed by the at least one processor, may cause the electronic device to display a screen to guide the misalignment, based on identifying a film between the display and the fingerprint sensor or thickness of the display positioned on the fingerprint sensor based on the information obtained by using the fingerprint sensor.

As described above, according to an embodiment, a method of an electronic device is provided. The method may comprise outputting light in which a specified pattern to identify misalignment of a fingerprint sensor with respect to a display is included. The fingerprint sensor may be configured to sense light that is penetrated through the display and is reflected by an external object, and is disposed under the display. The method may comprise obtaining information by sensing light that is reflected by the external object on the display and is outputted to display the specified pattern, by using the fingerprint sensor. The method may comprise identifying misalignment of the fingerprint sensor with respect to the display based on obtained information and information with respect to the specified pattern.

For example, the outputting may comprise outputting the light representing lines separated along a preset distance.

For example, the determining may comprise, based on distortion of the lines represented by the light reflected by the external object that is indicated by the information obtained by using the fingerprint sensor, determining the misalignment.

For example, the determining may comprise identifying deviation of a distance between the fingerprint sensor and a surface of the display based on deviations of thicknesses of the lines.

For example, the determining may comprise identifying a tilt of the fingerprint sensor based on angles of lines with respect to a reference axis that is indicated by the information obtained by using the fingerprint sensor.

For example, the outputting may comprise changing a position of the specified pattern represented by the light based on a preset period.

For example, the outputting may comprise changing a position of the specified pattern represented by the light in a portion of the display corresponding to the fingerprint sensor.

For example, the determining may comprise, based on identifying a film between the display and the fingerprint sensor or thickness of the display positioned on the fingerprint sensor based on the information obtained by using the fingerprint sensor, display a screen to guide the misalignment.

As described above, according to an embodiment, an electronic device may comprise a first housing, a second housing rotatably coupled with respect to the first housing, a flexible display disposed on the first housing and the second housing, a fingerprint sensor superimposed with the flexible display in a surface of the second housing in which the flexible display is disposed, memory storing instructions, and at least one processor. The instructions, when executed by the at least one processor, may cause the electronic device to display a first screen including light facing the fingerprint sensor on the flexible display, while an angle between the first housing and the second housing is included in an angle range less than a preset angle. The instructions, when executed by the at least one processor, may cause the electronic device to obtain information on the light received by the fingerprint sensor while displaying the first screen. The instructions, when executed by the at least one processor, may cause the electronic device to display a second screen for guiding reassembly of the fingerprint sensor, based on identifying misalignment of the fingerprint sensor with respect to the flexible display based on the information.

For example, the instructions, when executed by the at least one processor, may cause the electronic device to display the first screen configured to display a visual object in a first position of the flexible display. The first position in the first screen and a second position of the second housing in which the fingerprint sensor is disposed may be symmetrical with respect to a folding axis connecting the first housing and the second housing.

For example, the instructions, when executed by the at least one processor, may cause the electronic device to display the visual object including a plurality of lines spaced apart along a preset distance.

For example, the instructions, when executed by the at least one processor, may cause the electronic device to identify a position of the fingerprint sensor with respect to the flexible display, based on an interval or thickness of the plurality of lines, indicated by the information.

As described above, according to an embodiment, a method of an electronic device is provided. The method may comprise displaying a first screen including light facing a fingerprint sensor of the electronic device on a flexible display disposed on a first housing and a second housing, while an angle between a first housing and a second housing is included in an angle range less than a preset angle. The method may comprise obtaining information on the light received by the fingerprint sensor while displaying the first screen. The method may comprise displaying a second screen for guiding reassembly of the fingerprint sensor, based on identifying misalignment of the fingerprint sensor with respect to the flexible display based on the information.

For example, the displaying the first screen may comprise displaying the first screen configured to display a visual object in a first position of the flexible display. The first position in the first screen and a second position of the second housing in which the fingerprint sensor is disposed may be symmetrical with respect to a folding axis connecting the first housing and the second housing.

For example, the displaying the visual object may comprise displaying the visual object including a plurality of lines spaced apart along a preset distance.

For example, the obtaining may comprise identifying a position of the fingerprint sensor with respect to the flexible display, based on an interval or thickness of the plurality of lines, indicated by the information.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

**Claims**

**1.** An electronic device (101), comprising:

a display (110);
a fingerprint sensor (120) disposed under the display (110) for sensing light that is penetrated through the display (110) and is reflected by an external object on the display (110);

memory (215) storing instructions; and
at least one processor (210), wherein the instructions, when executed by the at least one processor (210), cause the electronic device (101) to:

output light in which a specified pattern to identify misalignment of the fingerprint sensor (120) with respect to the display (110) is included, the output light representing lines separated along a preset distance;
obtain information by sensing light that is reflected by the external object on the display (110) and is outputted to display the specified pattern, by using the fingerprint sensor (120);
determining misalignment of the fingerprint sensor (120) with respect to the display (110) based on obtained information and information with respect to the specified pattern, wherein the misalignment is determined based on distortion of the lines represented by the light reflected by the external object that is indicated by the information obtained by using the fingerprint sensor (120).

2. The electronic device (101) of claim 1, wherein the instructions, when executed by the at least one processor (210), cause the electronic device (101) to:
identify deviation of a distance between the fingerprint sensor (120) and a surface of the display (110) based on deviations of thicknesses of the lines.

3. The electronic device (101) of claim 1 to claim 2, wherein the instructions, when executed by the at least one processor (210), cause the electronic device (101) to:
identify a tilt of the fingerprint sensor (120) based on angles of lines with respect to a reference axis that is indicated by the information obtained by using the fingerprint sensor (120).

4. The electronic device (101) of claim 1 to claim 3, wherein the instructions, when executed by the at least one processor (210), cause the electronic device (101) to:
display a screen to guide rearrangement of the fingerprint sensor (120).

5. A method of an electronic device, comprising:

outputting (1110) light in which a specified pattern to identify misalignment of a fingerprint sensor with respect to a display is included, wherein the fingerprint sensor is configured to sense light that is penetrated through the display and is reflected by an external object, and is disposed under the display, wherein the outputting comprises outputting the light representing lines separated along a preset distance;
obtaining (1120) information by sensing light that is reflected by the external object on the display and is outputted to display the specified pattern, by using the fingerprint sensor;
determining (1130) misalignment of the fingerprint sensor with respect to the display based on obtained information and information with respect to the specified pattern, wherein the determining comprises based on distortion of the lines represented by the light reflected by the external object that is indicated by the information obtained by using the fingerprint sensor, determining the misalignment.

6. The method of claim 5, wherein the determining comprises:
identifying deviation of a distance between the fingerprint sensor and a surface of the display based on deviations of thicknesses of the lines.

7. The method of claim 5 to claim 6, wherein the determining comprises:
identifying a tilt of the fingerprint sensor based on angles of lines with respect to a reference axis that is indicated by the information obtained by using the fingerprint sensor.

8. The method of claim 5 to claim 7, further comprising:
displaying a screen to guide rearrangement of the fingerprint sensor (120).

**Patentansprüche**

1. Elektronische Vorrichtung (101), umfassend:

eine Anzeige (110);
einen Fingerabdrucksensor (120), der unter der Anzeige (110) angeordnet ist, um Licht zu erfassen, das durch die Anzeige (110) hindurchdringt und von einem externen Objekt auf der Anzeige (110) reflektiert wird;
einen Speicher (215), der Anweisungen speichert; und
mindestens einen Prozessor (210), wobei die Anweisungen, wenn sie von dem mindestens einen Prozessor (210) ausgeführt werden, die elektronische Vorrichtung (101) veranlassen zum:

Ausgeben von Licht, das ein spezifiziertes Muster zur Identifizierung einer Fehlausrichtung des Fingerabdrucksensors (120) in Bezug auf die Anzeige (110) beinhaltet, wobei das ausgegebene Licht Linien darstellt, die entlang eines voreingestellten Abstands getrennt sind;
Erhalten von Informationen mit Hilfe des Fingerabdrucksensors (120) durch Erfassen von Licht, das von dem externen Objekt auf der Anzeige (110) reflektiert wird und ausgegeben wird, um das spezifizierte Muster anzuzeigen;
Bestimmen einer Fehlausrichtung des Fingerabdrucksensors (120) in Bezug auf die Anzeige (110) basierend auf erhaltenen Informationen und Informationen in Bezug auf das spezifizierte Muster, wobei die Fehlausrichtung basierend auf einer Verzerrung der Linien bestimmt wird, die durch das von dem externen Objekt reflektierte Licht dargestellt werden, das durch die unter Verwendung des Fingerabdrucksensors (120) erhaltenen Informationen angezeigt wird.

2. Elektronische Vorrichtung (101) nach Anspruch 1, wobei die Anweisungen bei Ausführung durch den mindestens einen Prozessor (210) die elektronische Vorrichtung (101) veranlassen zum:
Identifizieren einer Abweichung eines Abstands zwischen dem Fingerabdrucksensor (120) und einer Fläche der Anzeige (110) basierend auf Abweichungen der Dicken der Linien.

3. Elektronische Vorrichtung (101) nach Anspruch 1 bis Anspruch 2, wobei die Anweisungen bei Ausführung durch den mindestens einen Prozessor (210) die elektronische Vorrichtung (101) veranlassen zum:
Identifizieren einer Neigung des Fingerabdrucksensors (120) basierend auf Winkeln von Linien in Bezug auf eine Referenzachse, die durch die unter Verwendung des Fingerabdrucksensors (120) erhaltenen Informationen angezeigt wird.

4. Elektronische Vorrichtung (101) nach Anspruch 1 bis Anspruch 3, wobei die Anweisungen bei Ausführung durch den mindestens einen Prozessor (210) die elektronische Vorrichtung (101) veranlassen zum:
Anzeigen eines Bildschirms zur Anleitung der Neuanordnung des Fingerabdrucksensors (120).

5. Verfahren einer elektronischen Vorrichtung, umfassend:

Ausgeben (1110) von Licht, in dem ein spezifiziertes Muster zum Identifizieren einer Fehlausrichtung eines Fingerabdrucksensors in Bezug auf eine Anzeige enthalten ist, wobei der Fingerabdrucksensor konfiguriert ist, um Licht zu erfassen, das durch die Anzeige durchdringt und von einem externen Objekt reflektiert wird, und unter der Anzeige angeordnet ist, wobei das Ausgeben das Ausgeben des Lichts umfasst, das Linien darstellt, die entlang eines voreingestellten Abstands getrennt sind;
Erhalten (1120) von Informationen mit Hilfe des Fingerabdrucksensors durch Erfassen von Licht, das von dem externen Objekt auf der Anzeige reflektiert wird und ausgegeben wird, um das spezifizierte Muster anzuzeigen;
Bestimmen (1130) einer Fehlausrichtung des Fingerabdrucksensors in Bezug auf die Anzeige basierend auf erhaltenen Informationen und Informationen in Bezug auf das spezifizierte Muster, wobei das Bestimmen basierend auf einer Verzerrung der Linien, die durch das von dem externen Objekt reflektierte Licht repräsentiert werden, das durch die unter Verwendung des Fingerabdrucksensors erhaltenen Informationen angezeigt wird, das Bestimmen der Fehlausrichtung umfasst.

6. Verfahren nach Anspruch 5, wobei das Bestimmen Folgendes umfasst:
Identifizieren einer Abweichung eines Abstands zwischen dem Fingerabdrucksensor und einer Fläche der Anzeige basierend auf Abweichungen der Dicken der Linien.

7. Verfahren nach Anspruch 5 bis Anspruch 6, wobei das Bestimmen Folgendes umfasst:
Identifizieren einer Neigung des Fingerabdrucksensors basierend auf Winkeln von Linien in Bezug auf eine Referenzachse, die durch die unter Verwendung des Fingerabdrucksensors erhaltenen Informationen angezeigt wird.

8. Verfahren nach Anspruch 5 bis Anspruch 7, ferner umfassend:
Anzeigen eines Bildschirms zur Anleitung der Neuanordnung des Fingerabdrucksensors (120).

**Revendications**

1. Dispositif électronique (101), comprenant :

   un affichage (110) ;
   un capteur d'empreintes digitales (120) disposé sous l'affichage (110) pour détecter la lumière qui pénètre à travers l'affichage (110) et qui est réfléchie par un objet externe sur l'affichage (110) ;
   une mémoire (215) stockant des instructions ; et
   au moins un processeur (210), dans lequel les instructions, lorsqu'elles sont exécutées par l'au moins un processeur (210), amènent le dispositif électronique (101) à :

   émettre une lumière dans laquelle est inclus un motif spécifié permettant d'identifier un désalignement du capteur d'empreintes digitales (120) par rapport à l'affichage (110), la lumière émise représentant des lignes séparées le long d'une distance prédéfinie ;
   obtenir des informations en détectant la lumière qui est réfléchie par l'objet externe sur l'affichage (110) et qui est émise pour afficher le motif spécifié, en utilisant le capteur d'empreintes digitales (120) ;
   déterminer le désalignement du capteur d'empreintes digitales (120) par rapport à l'affichage (110) sur la base des informations obtenues et des informations relatives au motif spécifié, le désalignement étant déterminé sur la base de la distorsion des lignes représentées par la lumière réfléchie par l'objet externe qui est indiquée par les informations obtenues à l'aide du capteur d'empreintes digitales (120).

2. Dispositif électronique (101) de la revendication 1, dans lequel les instructions, lorsqu'elles sont exécutées par l'au moins un processeur (210), amènent le dispositif électronique (101) à :
   identifier l'écart d'une distance entre le capteur d'empreintes digitales (120) et une surface de l'affichage (110) en se basant sur les écarts d'épaisseurs des lignes.

3. Dispositif électronique (101) de la revendication 1 à la revendication 2, dans lequel les instructions, lorsqu'elles sont exécutées par l'au moins un processeur (210), amènent le dispositif électronique (101) à :
   identifier une inclinaison du capteur d'empreintes digitales (120) en se basant sur les angles des lignes par rapport à un axe de référence qui est indiqué par les informations obtenues en utilisant le capteur d'empreintes digitales (120).

4. Dispositif électronique (101) de la revendication 1 à la revendication 3, dans lequel les instructions, lorsqu'elles sont exécutées par l'au moins un processeur (210), amènent le dispositif électronique (101) à :
   afficher un écran pour guider le réarrangement du capteur d'empreintes digitales (120).

5. Procédé d'un dispositif électronique, comprenant :

   émettre (1110) une lumière dans laquelle est inclus un motif spécifié permettant d'identifier un désalignement d'un capteur d'empreintes digitales par rapport à un affichage, le capteur d'empreintes digitales étant configuré pour détecter la lumière qui pénètre à travers l'affichage et qui est réfléchie par un objet externe, et étant disposé sous l'affichage, l'émission comprenant l'émission de la lumière représentant des lignes séparées le long d'une distance prédéfinie ;
   obtenir (1120) des informations en détectant la lumière qui est réfléchie par l'objet externe sur l'affichage et qui est émise pour afficher le motif spécifié, en utilisant le capteur d'empreintes digitales ;
   déterminer (1130) le désalignement du capteur d'empreintes digitales par rapport à l'affichage sur la base des informations obtenues et des informations relatives au motif spécifié, la détermination comprend, sur la base de la distorsion des lignes représentées par la lumière réfléchie par l'objet externe qui est indiquée par les informations obtenues en utilisant le capteur d'empreintes digitales, la détermination du désalignement.

6. Procédé de la revendication 5, dans lequel la détermination comprend :
   identifier l'écart d'une distance entre le capteur d'empreintes digitales et une surface de l'affichage en se basant sur les écarts d'épaisseurs des lignes.

7. Procédé de la revendication 5 à la revendication 6, dans lequel la détermination comprend :
   identifier une inclinaison du capteur d'empreintes digitales en se basant sur les angles des lignes par rapport à un axe de référence qui est indiqué par les informations obtenues en utilisant le capteur d'empreintes digitales.

8. Procédé de la revendication 5 à la revendication 7, comprenant en outre :

afficher un écran pour guider le réarrangement du capteur d'empreintes digitales (120).

FIG. 1

FIG. 2

**310**

OBTAIN FIRST INFORMATION ON FINGERPRINT SENSOR USING FIRST EXTERNAL OBJECT POSITIONED ON PORTION OF DISPLAY

110
101
120
**305**

**172**

**320**

OBTAIN SECOND INFORMATION ON FINGERPRINT SENSOR USING SECOND EXTERNAL OBJECT POSITIONED ON PORTION OF DISPLAY

110 101

**305**

120

**174**

**330**

OBTAIN THIRD INFORMATION ON FINGERPRINT SENSOR, BASED ON ONE OR MORE VISUAL OBJECTS DISPLAYED WITHIN DISPLAY

**335**

120

**340**

IDENTIFY POSITIONAL RELATIONSHIP BETWEEN DISPLAY AND FINGERPRINT SENSOR, BASED ON AT LEAST ONE OF FIRST INFORMATION, SECOND INFORMATION, AND THIRD INFORMATION

110
101

**178**

FIG. 3A

110 101

COVER THE RECTANGULAR PORTION WITH WHITE PAPER

352 — NEXT

354

120

350

DISPLAY FIRST SCREEN FOR GUIDING TO DISPOSE EXTERNAL OBJECT ON PORTION OF DISPLAY

110 101

362

120

360

DISPLAY SECOND SCREEN INCLUDING ONE OR MORE VISUAL OBJECTS IN RESPONSE TO INPUT INDICATING TO INITIATE DIAGNOSIS OF FINGERPRINT SENSOR

178

370

WHILE DISPLAYING SECOND SCREEN, OBTAIN INFORMATION ON REFLECTION LIGHT OF SECOND SCREEN WITH RESPECT TO EXTERNAL OBJECT, BY USING FINGERPRINT SENSOR

380

REARRANGEMENT OF FINGERPRINT SENSOR IS REQUIRED?

NO

YES

382

DISPLAY THIRD SCREEN FOR REARRANGEMENT OF FINGERPRINT SENSOR

384

TERMINATE DIAGNOSIS OF FINGERPRINT SENSOR

FIG. 3B

31

FIG. 4

FIG. 5

FIG. 6A

602

110
101

178

A ——————— A'

120

410

178

110-1
A                    A'
130
132
134
136
138
110-2

120

150

122
124
d4

d3    160

620

w3              w4

FIG. 6B

FIG. 6C

701

110
101

178

120

470

710

Pc

Pa

FIG. 7A

FIG. 7B

FIG. 8

FIG. 9

FINGERPRINT
SENSOR DIAGNOSIS

IT STARTS
WHEN FOLDING
THE DEVICE

FIG. 10A

FIG. 10B

```
┌────────────────────────────────────┐
│   DISPLAY FIRST SCREEN FOR OUTPUTTING   │──── 1110
│     LIGHT TOWARD EXTERNAL OBJECT        │
└────────────────────────────────────┘
                  │
                  ▼
┌────────────────────────────────────┐
│   OBTAIN INFORMATION ON LIGHT RECEIVED  │──── 1120
│         BY FINGERPRINT SENSOR           │
└────────────────────────────────────┘
                  │
                  ▼
┌────────────────────────────────────────┐
│ DISPLAY SECOND SCREEN FOR GUIDING CHANGE IN │
│ POSITION OF FINGERPRINT SENSOR WITH RESPECT │──── 1130
│ TO DISPLAY, BASED ON OBTAINED INFORMATION   │
└────────────────────────────────────────┘
```

FIG. 11

1200

ELECTRONIC DEVICE 1201

INPUT
MODULE
1250

SOUND
OUTPUT
MODULE
1255

DISPLAY
MODULE
1260

MEMORY 1230

VOLATILE MEMORY 1232

NON-VOLATILE MEMORY 1234

INTERNAL MEMORY 1236

EXTERNAL MEMORY 1238

PROGRAM 1240

APPLICATION 1246

MIDDLEWARE 1244

OPERATING SYSTEM 1242

BATTERY
1289

POWER
MANAGE-
MENT
MODULE
1288

PROCESSOR 1220

MAIN
PROCESSOR
1221

AUXILIARY
PROCESSOR
1223

COMMUNICATION MODULE 1290

WIRELESS COMMUNICATION
MODULE 1292

WIRED COMMUNICATION
MODULE 1294

SUBSCRIBER
IDENTIFICATION
MODULE
1296

ANTENNA
MODULE
1297

AUDIO MODULE
1270

SENSOR MODULE
1276

HAPTIC MODULE
1279

CAMERA MODULE
1280

INTERFACE
1277

CONNECTING
TERMINAL
1278

SECOND
NETWORK
1299

ELECTRONIC
DEVICE
1204

FIRST NETWORK
1298

ELECTRONIC
DEVICE
1202

SERVER
1208

FIG. 12

**EP 4 498 217 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110490122 A